# EUROPEAN PATENT APPLICATION

(11) **EP 3 057 137 A1**
(43) Date of publication of application: **17.08.2016**
(21) Application number: 15180312.9
(22) Date of filing: 08.08.2007
(51) Int. Cl.: H01L 31/05, F24D 5/02, F24D 5/10, F24J 2/40, F24D 11/00, F24D 19/10, F24F 3/14, F24J 2/00, H02S 40/44, H02S 20/23

(54) **TOPOLOGIES, SYSTEMS AND METHODS FOR CONTROL OF SOLAR ENERGY SUPPLY SYSTEMS**

(30) Priority: 08.08.2006 US 821811 P; 18.08.2006 US 822924 P
(62) Divisional of application: 07873764.0
(71) Applicant: PVT Solar, Inc., Berkeley, CA 94710 (US)
(72) Inventor: PLAISTED, Joshua Reed, Oakland, CA California 94619 (US)
(74) Representative: Potter, Julian Mark

(57) **Abstract**

A control system or controller solar module array may be operated by (i) programmatically determining, for a given time period, a demand for an output of the solar module array by one or more energy consuming resources at the target location; and (ii) affecting an efficiency of the solar module array based at least in part on the determined demand.

## Description

The U.S. Government has a paid-up license in this invention and the right in limited circumstances to require the patent owner to license others on reasonable terms as provided for by the terms of contract No. NDC-5-55022-01 and contract No. NDO-3-33457-02, both awarded by the Department of Energy.

This invention was made with U.S. Government support under Subcontract No. NDO-3-33457-02 under the prime contract with National Renewable Energy Laboratory awarded by the Department of Energy. The Government has certain rights in this invention.

### PRIORITY APPLICATIONS

This application claims benefit of priority to Provisional U.S. Patent Application No. 60/821,811, filed August 8, 2006, entitled "Topologies and Methods of Control for PV and Thermal Integrated Energy Supply Systems," naming Joshua Reed Plaisted as inventor; the aforementioned application being hereby incorporated by reference in its entirety for all purposes.

This application claims benefit of priority to Provisional U.S. Patent Application No. 60/822,924, filed August 18, 2006, entitled "Advanced Controls and Configurations for Solar Heating and Cooling Systems," naming Joshua Reed Plaisted as inventor; the aforementioned application being hereby incorporated by reference in its entirety for all purposes.

### TECHNICAL FIELD

The disclosed embodiments relate generally to the field of solar energy supply systems. In particular, the disclosed embodiments relate to systems and methods for control of solar energy supply systems.

### BACKGROUND

Concerns over energy have led to a growth in the use of solar energy technologies to displace the use of conventional fuels. Increases in energy prices and the desire to 'build green' have led to the use of solar electric modules to provide electricity (PV) and solar thermal modules (T) to provide heating services for homes and other building structures. Currently, most solar systems are stand alone designs that produce either electricity using PV, or thermal energy for Domestic Hot Water (DHW) production and space heating. However, constraints on available roof space, concerns over aesthetics, and the ability of modem controls to optimize system operation have created the potential for improved and optimized performance of solar arrays and the application of their absorbed energy be it thermal and/or electrical to service disparate loads within a structure. In addition to the potential for the optimization and enhanced performance of traditional solar arrays through advanced control strategies, even more efficient operation of can be achieved through combination systems (combi-systems). In the traditional industry definition, a combi-system is a solar thermal system that combines DHW production together with the heating of the conditioned building space. This definition has been further extended in recent years to include the potential for solar assisted cooling through desiccant cooling, or absorption cooling cycles. In a final extension of the combi-system definition, photovoltaic (PV) arrays can be made integral or physically coupled to thermal (T) arrays for heating and cooling production in addition to electrical production. Such a combination of PV and Thermal generation within an array of solar modules may be referred to as a PVT array.

With the combination of several energy generating components and the increased complexity of thermal and electrical loads within both residential and commercial building structures, the optimal operation of the energy producing elements within a PVT array and their matched application to respective loads creates many possibilities and strategies to the coupling of generated energy to appropriate load demands within a structure. New control structures and system implementations are required to optimize the performance of these systems.

Arrays of PV modules are typically placed in direct sunlight to convert solar irradiance into electricity. By the nature of their placement in direct sunlight, PV modules themselves produce a large thermal output as well. This is due to the fact that most PV modules have an efficiency of 10-18% in converting solar irradiance into electricity and most of the remaining solar energy is converted into heat by the module. Therefore, a PVT array could consist solely as an array of PV modules and still provide thermal generation. The array can be further enhanced through the addition of thermal modules to augment thermal generation.

Examples of PVT arrays combi-system system designs include integrated PV arrays of PV modules that use the back plenum of the array to provide heated or cooled ventilation air. An example of such a design is provided by SONICWALL system from Conserval Engineering of Toronto, ON. There have also been liquid based designs such as those available from MILLENIUM electric of Israel, among others. These examples merely illustrate that there are a wide variety of solar arrays in both air and liquid (both of which are considered "fluid") based designs that are capable of use herein.

### BRIEF DESCRIPTION OF THE DRAWINGS

FIG. 1A illustrates a controller for controlling a solar module array and its usage at a target location, according to one or more embodiments of the invention.
FIG. 1B illustrates a solar module array configured in accordance with one or more embodiments of the invention.
FIG. 2 is a schematic of how a solar module array may be implemented in a target location, under an embodiment of the invention.
FIG. 3 is a sample graph of the efficiency of a solar module array as a function of volumetric fluid flow under an array of the solar modules, according to an embodiment of the invention.
FIG. 4 illustrates the typical operating voltage of a PV module in a solar module array based on cell temperature, under an embodiment of the invention.
FIG. 5 illustrates the practical operating range of PV module temperatures in solar module arrays, according to embodiments described herein.
FIG. 6 is a block diagram illustration of a control system, as described with embodiments of the invention.
FIG. 7 illustrates a block diagram of different components that are controllable by a controller, in accordance with one or more embodiments of the invention.
FIG. 8 is a block diagram representation of an output block for a controller for use as part of a system for performing optimization operations, under an embodiment of the invention.
FIG. 9 illustrates an embodiment in which a space conditioning exhaust can be sent through an Intermediate Thermal Mass (ITM).
FIG. 10 illustrates handling of an ancillary load in accordance with an embodiment of the invention.
FIG. 11 illustrates an embodiment in which a solar module array is connected to a typical air handling unit (AHU), in conjunction with an Intermediate Thermal Mass (ITM).
FIG. 12 shows one configuration for arranging a PVT array with a desiccant wheel positioned in the air stream to dehumidify air for the IDEC stage that follows, according to an embodiment of the invention.
FIG. 13 represents a generic case where multiple loads are placed in series and parallel with the solar module array exhaust, in accordance with an embodiment of the invention.
FIG. 14 illustrates a graph of temperature readings over time, as part of a technique by which a controller is able to infer occupancy of the target location and usage of electrical/thermal loads, under an embodiment of the invention.
FIG. 15 is a hardware diagram that depicts a controller in accordance with one or more embodiments provided herein.

### DETAILED DESCRIPTION

Embodiments described herein for provide for the control and/or use of a solar module array. An embodiment provides for use of both thermal and electrical energy, as provided by a solar module array that outputs both electrical and thermal energy. Among numerous embodiments described, a controller control system is provided that can fluctuate or vary an efficiency of the solar module array based on a determined or anticipated energy need.

In an embodiment, a controller or control system is provided for enhancing how thermal and/or electrical energy is distributed. In such an embodiment, a controller may be configured to factor in various considerations, such as what loads are best services with energy to minimize utility costs or otherwise service the energy requirements of the target location.

Still further, one or more embodiments provide that the control system or controller implements an optimization scheme to optimize cost savings and/or credits. Such an optimization scheme (or plan) may be implemented through efficiency fluctuations of the solar module array and/or energy usage of energy consuming assets.

In particular, one or more embodiments provide for operating a solar module array at a target location. The solar module array may be operated by (i) programmatically determining, for a given time period, a demand for an output of the solar module array by one or more energy consuming resources at the target location; and (ii) affecting an efficiency of the solar module array based at least in part on the determined demand.

According to an embodiment, a system for operating a solar module array that is mounted for use by a target location. The system may include a device that is operational to direct fluid flow under the solar module array, where the fluid flow is in sufficient proximity to the solar module array to affect an operational temperature of at least a region of the solar module array. The system may also include a controller that is coupled to the device. The controller may control operation of the device to affect a flow rate of the fluid under the solar module array. The system may also include bus that interconnects the controller to one or more resources that provide energy consumption information about one or more components in the target location. The controller may be configured to control the device in directing the fluid flow so as to affect the operational temperature of the solar module array, based at least in part on the energy consumption information.

In another embodiment, a controller is provided for a solar module array, wherein the solar module array is mounted in operation at a target location. The controller may include a control module and an interface module. The control module may be configured to control a device that is operational to direct fluid flow under the solar module array. The fluid flow may be in sufficient proximity to the solar module array to affect an operational temperature of at least a region of the solar module array. The control module controls operation of the device to affect a flow rate of the fluid under the solar module array. The interface module may be coupled to a data bus and configured to process energy consumption information that is received from any one of a plurality of components. Each of the plurality of components may be configured to detect or determine an energy consumption by one or more components that are serviced by an output of the solar module array. The control module is further configured to control the operation of the device using the energy consumption information.

In another embodiment, a system is provided for operating a solar module array that is mounted for use by a target location. The system includes a device that is operational to direct a fluid just beneath the solar module array. The device may be configured or positioned to cause the fluid to flow in sufficient proximity to the solar module array to affect an operational temperature of at least a region of the solar module array while heating the fluid. The system may also include distribution equipment that combines to direct (i) the heated fluid or (ii) energy generated from the heated fluid to the one or more energy consuming resources of the target location. One or more components that are configured to detect or determine an energy consumption by one or more assets that are serviced by use of the solar module array. A controller may be coupled to the device to control operation of the device. Such control may affect a flow rate of the fluid beneath the solar module array. The system may also include a bus that interconnects the controller to one or more resources that provide energy consumption information about one or more components in the target location. The controller may be configured to control the operational capacity of the device using the energy consumption information.

One or more embodiments described herein provide that operations or actions that are performed by a controller, control system or component for a control system, are performed programmatically. Programmatically means through the use of code, or computer-executable instructions. A programmatically performed step may or may not be automatic.

Embodiments recited herein provide for use of modules. As used herein, a module includes a program, a subroutine, a portion of a program, or a software component or a hardware component capable of performing one or more stated tasks or functions. A module can exist on a hardware component independently of other modules, or a module can be a shared element or process of other modules, programs or machines.

Furthermore, one or more embodiments described herein may be implemented through the use of instructions that are executable by one or more processors. These instructions may be carried on a computer-readable medium. Machines shown in figures below provide examples of processing resources and computer-readable mediums on which instructions for implementing embodiments of the invention can be carried and/or executed. In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on many cell phones and personal digital assistants (PDAs)), and magnetic memory. Computers, terminals, network enabled devices (e.g. mobile devices such as cell phones) are all examples of machines and devices that utilize processors, memory, and instructions stored on computer-readable mediums.

Embodiments described herein provide unique arrangements on the integration and control of combined PVT arrays that optimize both the thermal and electrical savings generated by these systems. Many of these arrangements can be applied to generic PVT array designs, and some are specifically designed to optimize the performance of air-based PVT arrays, such as those described in US Patent Application 11/332,000, which is hereby incorporated by reference in its entirety.

While some embodiments described herein relate to air based systems, many of the controls and integration methods may also apply to liquid based designs. Furthermore, while a residential home is used to illustrate the thermal and electrical loads of a typical structure, all the concepts equally apply to other structures ranging from auditoriums to commercial facilities.

As a variation or addition to any of the embodiments described herein, advanced system control concepts may be used that are capable of optimally operating PVT systems. Because PVT systems are capable of simultaneous energy generation from multiple sources (PV and Thermal), and operable to service multiple loads (e.g. space heating, water heating, ventilation and others), the control of these systems presents many challenges. As such, not every control opportunity described with a particular embodiment applies to every possible configuration described or potential combination thereof. As such, each of the control opportunities should be considered as having independent signifcance as well as significance in combination with other embodiments.

As used herein, the term "scheme" refers to plan or a systematic plan of action. In one embodiment, a scheme may be implemented by identifying or maintaining a list of priorities, and acting on the priorities.

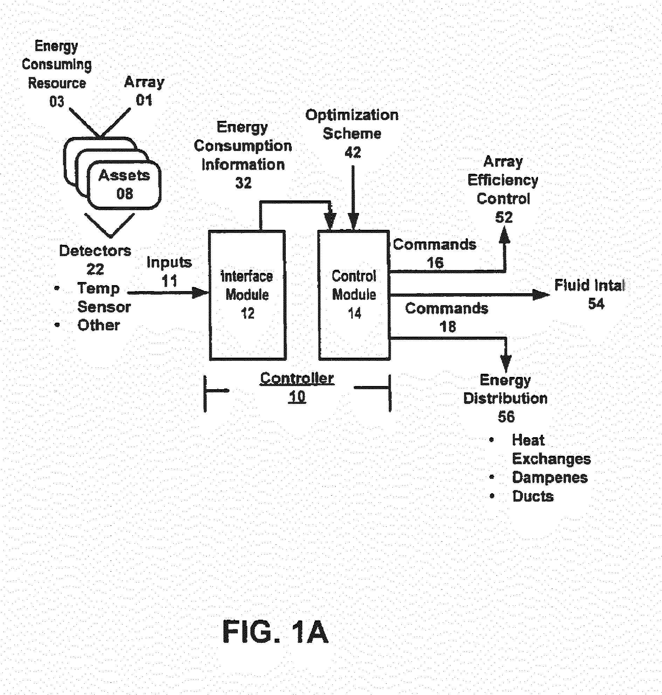

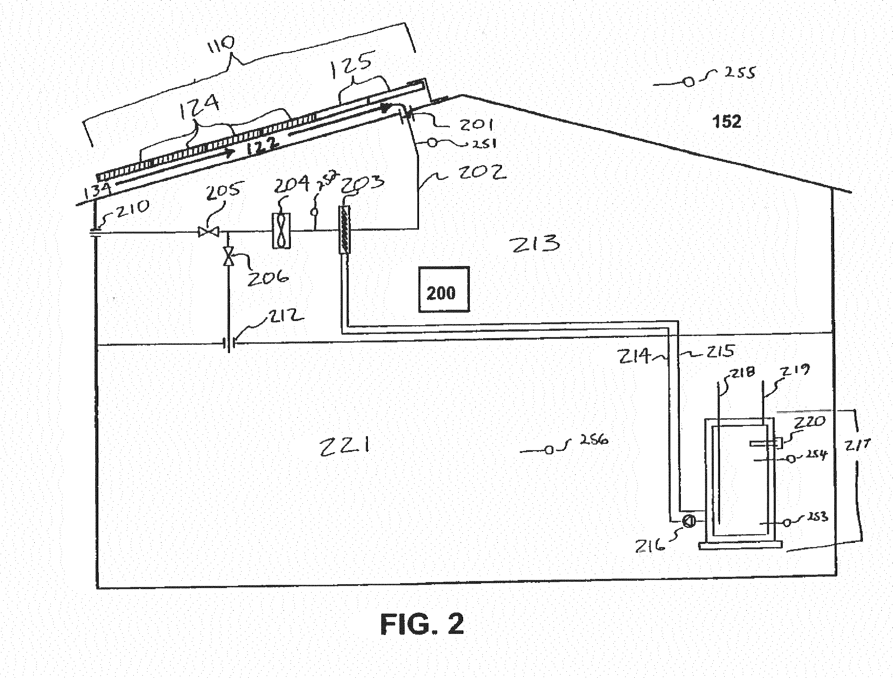

FIG. 1A illustrates a controller for controlling a solar module array and its usage at a target location, according to one or more embodiments of the invention. In an embodiment, a controller may be provided in connection with installation and use of a solar module array, such as shown and described with an embodiment of FIG. 1A or FIG. 2. Under one embodiment, an embodiment such as shown may be used in connection with a hybrid array, in which one or more solar modules of the array serve a primary purpose of being a thermal generator. Embodiments such as described in FIG. 1A provide for passage of fluid in proximity to an underside of the solar module array, for purpose of cooling individual modules that comprise the array while collecting thermal energy as output from the array. For example, air or other fluids may be directed in ducts or confined (or semi-confined) spaces just underneath the array so as to heat up from the operating temperature of individual modules in the array.

As will be described, the target location where controller 10 and the corresponding solar module array may be installed or implemented may correspond to a building, a home or dwelling, or other structure where electricity and/or heat is used.

In an embodiment, a controller 10 is formed from components that include an interface module 12 and a control module 14. The interface module 12 may receive inputs from various remote and local sources regarding the energy consumption of different assets 08 within the target location. In other embodiment described herein, a remote and local bus is described for such sources.

The assets 08 include energy generating assets 01 and energy consuming assets 03 (or "loads"). Energy generating assets include thermal and electrical variety, and encompass the solar module array. Energy consuming assets remove energy (thermal or electrical) from the fluid (e.g. air stream). Energy consuming thermal assets may correspond to, for example, spaces where heating is provided, or sources of water that are heated (e.g. domestic hot water or swimming pool) or thermal mass components. Energy consuming electrical assets also include electrical assets, which are systems that consume electrical energy (DC or AC).

According to an embodiment, controller 10 receives input data 11 from detectors 22. The detectors 22 correspond to any equipment that ascertains the energy needs or consumption of the assets 08. These may include, for example, temperature sensors, pressure sensors, gauges, meters and other equipment. As described with other embodiments, a local bus may connect the controller 10 to the detectors to receive the input data 14. Under one embodiment, the input data 11 is received in real-time, or as feedback to control implementations.

The interface module 12 may communicate energy consumption information 32 to the control module 14. The control module 14 may be equipped with programming or other logic to implement commands 16, 18 or other controls. Under one implementation, the commands 16, 18 may include device commands, and thus may take form in mechanical transformation or action.

In one embodiment, the control module 14 uses the energy consumption information 32 in controlling devices that affect the efficiency of the solar module array. These devices may include, for example, a blower or other mechanism 52 that directs air flow underneath the modules of the array. For example, the blower may accelerate or de-accelerate airflow(or other fluid flow) under the solar module array. As an alternative or addition, the devices that effect the efficiency of the solar module array include electromechanical control of fluid speed (assuming fluid may be something other than air), ventilation input (fluid is air). In one embodiment, the control module 14 determines a range of efficiency for operation of the array based in part on the energy consumption information 32.

As an alternative or addition to affecting the efficiency of the solar module array, one or more embodiments provide that the control module 14 controls the intake 54 of thermal output from the array. In one embodiment, the solar module array heats fluid through a combination of photovoltaic and thermal modules. The rate and manner in which the heated fluid (e.g. hot air) is taken into an energy distribution system of the target location may be affected by the control module 14, based in part on determinations made from the energy consumption information 32.

Still further, the control module 14 may configure the manner in which energy (both thermal and electrical) is distributed through the system of the target location. In particular, one or more embodiments provide that the control module 14 selects amongst energy consuming assets to service in a given duration with either hear or electrical output. The selection may optionally be based on one or more optimization scheme 42, as well as other criteria such as usage rules. The usage rules may dictate, for example, common sense measures, such as avoid heating the pool on cold days, or save high-electrical loads for non-peak hours. The usage rules may also dictate preferences or other measures that are known to accommodate a specific goal. In more detail, the optimization scheme 42 may also be in the form of rules, but factor a primary goal or set of goals as criteria. In one embodiment, the optimization scheme 42 may factor cost-saving criteria, so as to minimize the cost of energy consumption at the target location. As such, the optimization scheme 42 may factor in, for example, what assets 08 are serviced at a given time of the day based on the amount of irradiance that is present or expected, as compared to the cost of using energy from a utility source in that same period.

In order to implement the optimization scheme 42 and various rules as to how energy (thermal or electrical) is distributed, one or more embodiments provide that the control module 14 has access and control of energy distribution equipment 56. These may include, for example, heat exchanges that receive heated fluid and consume heat therefrom, ducts, dampers, and blowers/fans for moving air or other fluids. Such control may be provided as an alternative or addition to control of components that, for example, push or otherwise direct airflow under the solar module array.

In an embodiment, the controller 10, or portions thereof, is implemented in the form of a dedicated device that is mounted or otherwise placed in position to receive on-site the electrical consumption information 32. Thus, for example, the controller 10 may be implemented in the form of a box, through hardware, firmware or software, that directly communicates with, for example, temperature sensors and other equipment. In other embodiments, however, the controller 10 may be implemented on a computer, such as on a personal computer (desktop machine, laptop, small-form factor device etc.) or microcontroller. Still further, the controller 10 may be distributed, in that logic comprising the controller 10 or its modules may be distributed over multiple machines or devices, and/or at multiple locations.

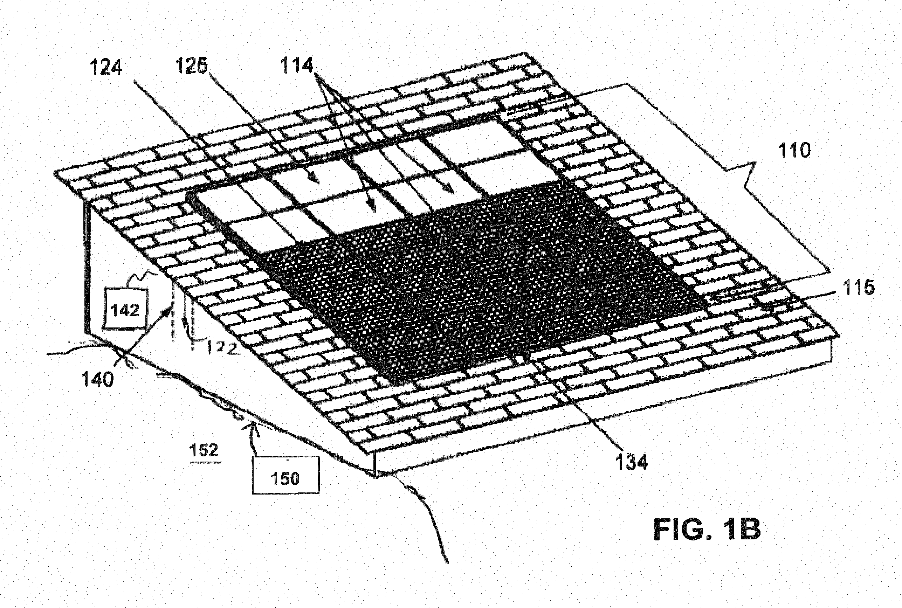

FIG. 1B illustrates a solar module assembly configured in accordance with one or more embodiments of the invention. In FIG. 1B, a solar module array 110 comprises of a plurality of solar modules. The solar module array 110 may be mounted in vicinity of a target location. The target location may correspond to a building or dwelling that is to receive output from the array 110. In an embodiment, array 110 includes a combination of thermal modules (T) 125 and photovoltaic modules (PV) 124. Thermal modules 125 primarily generate heat from solar radiation, while PV modules 124 primarily generate electricity with heat as an incidental byproduct. One or more embodiments recognize that because PV modules 124 represent unglazed thermal collectors, the maximum air stream temperature provided behind the modules is only sufficient to provide thermal energy for use in subsequent systems with limited capacity. To achieve higher temperatures, a set of thermal modules 125 explicitly designed for heat production may be employed beyond the PV modules 124.

Fluid 122 may be drawn underneath array 110 and heated by (i) thermal energy generated from thermal modules (T) 125 in the array 110, and/or (ii) incidental heat generated from operation of PV modules 124 in array 110. In one implementation, the fluid 122 corresponds to ambient air, and a fan or other ventilation component is used to draw the ambient air in under a bottom (or entry) edge 134 of array 110.

One embodiment employs a configuration in which the ambient air is first drawn under the PV modules 124 before being passed under the thermal modules 125. Furthermore, an embodiment provides that the bottom edge 134 is either unsealed or partially sealed so as to enable entry of ambient air as fluid 122. A remaining perimeter of the array 110 may be sealed. Such an embodiment recognizes that admitting ambient air in through the bottom edge 134 of array 110 has a dual effect of cooling the PV modules 124 while at the same time pre-heating the air stream for the thermal modules 125. The array 110 implements such a configuration with PV modules 124 positioned at the base of the array 110 to receive first-in-time the drawn ambient air. The thermal modules 125 are placed at the top of the PVT array 110 to increase the outlet temperature. Numerous other configurations are also possible, where, for example, ambient air is guided or forced under the PV modules 124 before being passed under the thermal modules 125.

The heated air stream may be collected from the array by one or more ducts 140 and provided to various loads within a target location 152. The target location 152 may correspond to the building or space that directly uses output from array 110. Optionally, the ducts 140 may include air flow control mechanisms 142, such as baffles, that can reduce the amount of air that is received in duct 140. A controller 150 may be used to control the volumetric fluid flow that enters the duct 140. In one embodiment, the controller 150 can control the rate at which air is passed under the array 110. Additionally, controller 150 may adjust the air flow control mechanisms 142. Still further, the controller 150 may be coupled to components which can alter the inlet configuration for air into the array. Controller 150 may be equipped with logic or other resources such as described with one or more embodiments of FIG. 1BA, or elsewhere in the application.

FIG. 2 is a schematic of how array 110 may be implemented in a target location, under an embodiment of the invention. As described, array 110 may be provided for use in a dwelling, building or other confined space or region. The array 110 is capable of supplying both space and water heating to a structure, in addition electrical power generation.

In one embodiment, a controller 200 or control system is provided that controls operations of array 110, as well as the use of fluid 122 which is received and distributed by mechanical sub-systems that provide heating services to target location 152. The mechanical sub-system may also distribute electrical services provided from the array 110 through out the location 152. In an implementation shown by FIG. 2, the loads for the heat output in location 152 include conditioned space 221, and Domestic How Water (DHW) at water heater 217.

The mechanical sub-system directs the fluid 122 from into the target location 152 via duct 202. Sensor 251 may interact with the incoming fluid 122 and provide temperature readings to the controller 200. The controller 200 is configured to detect when the array outlet sensor 251 detects fluid inflow temperature that is at a useable level. At useable levels, the energy may be applied towards heating the conditioned space 221 or to DHW production at the water heater 217.

When the controller 200 receives a temperature reading from sensor 251 indicating the outlet temperature of fluid 122 is at usable levels, the controller energizes a blower 204. It should be noted that at many instances the array outlet temperature sensor 251 will directly record accurate array outlet temperatures when the blower is idle due to convection and natural circulation through the system. However, if due to a specific arrangement, this does not occur, the blower 204 may be cycled at discrete intervals to provide an accurate reading at the sensor 251.

With, for example, the blower being activated, ambient air (as fluid 122) is drawn through the bottom edge of the array 134, where it is heated as it travels underneath the backside of the PV modules 124 and then heated directly by thermal modules 125. The backside of the PV modules 124 are cooled through this process as the air flow removes heat from the backside of the PV modules 124. It is well known that PV modules 124 operate more efficiently at lower temperatures, thus cooling the PV module 124 can increase electrical output improving overall efficiency of the array 110.

The air is drawn through the array thermal outlet 201 through a suitable ducting system 202 to a heat exchanger 203. The heat exchanger 203 may correspond to, for example, a hydronic fan coil or similar heat exchanger common to the trade for transferring heat between air and water streams. Controller 200 may receive temperature readings from a sensor 253 at the water heater 217. The controller 200 may make a determination as to whether there is energy available in the fluid 122 for DHW production by checking whether the temperature as measured by sensor 251 is hotter than the temperature as measured by sensor 253. If energy is available, the controller 200 may enable pump 216 to circulate fluid from the water heater 217 to the heat exchanger 203 through supply and return pipes 214,215 thereby providing DHW production for the target location.

According to an embodiment, once thermal energy has been pulled from the fluid 122 by the heat exchanger 203, thermal energy may still be available in the fluid 122 as measured by sensor 252. If it is the heating season and thermal energy remains in the fluid 122, the controller 200 may direct the fluid to, for example, the conditioned space 221. The direction of fluid 122 in this manner may be effectuated by opening and closing dampeners that serve to guide the fluid flow. In an arrangement provided, controller 200 may trigger opening of a damper 206, and closing of a damper 205, thus directing the fluid 122 through a vent 212. Alternately, if it is summertime and the thermal energy is undesirable for space conditioning, it can be exhausted outside by opening damper 205 and closing damper 206 to exhaust the air stream through vent 210.

While the obvious potential of array 110 is to provide heating service to the structure, it is also possible for the same array to provide cooling capacity at night by purging the conditioned space 221 with cool nighttime air. For proper cooling operation, the temperature reading of the array at sensor 251 needs to be colder than the temperature reading provided for the conditioned space 221 by sensor 256. Such a mode of operation may be provided in, for example, low sun conditions, or more typically at night. When cooling capacity is possible under these conditions, blower 204 may be operated, damper 205 is closed and damper 206 is opened to admit the cool array exhaust fluid 122 to be directed into the conditioned space 221 through vent 212.

Such an arrangement benefits climates with diurnal swings in which high daytime temperatures are followed by cooler nights. The specific configuration of the array 110 provides it an advantage over standard night time ventilation practices since the PV modules 124 represent a black body surface in radiative communication to the night sky. Whereas the coolest temperature achieved during typical night time ventilation is simply the ambient air temperature, the temperatures made possible at outlet 201 at the array 110 may be 5 C or more below ambient providing enhanced cooling capacity. This sub-cooling effect is achieved by night sky radiation on the surface of the array 110.

One or more embodiments recognize that an overall system such as described with an embodiment of FIG. 2 may be configured so that the outlet temperature that can be achieved from array 110 may be made dependent upon the ventilation rate of the airstream exhausted from the array. In an embodiment such as described in FIG. 2, the flow rate is controlled by blower 204 that can be speed modulated. A common variable to describe this array ventilation rate is V₀, which is the ventilation rate of the array in cubic feet per minute (CFM) divided by the surface area of the PVT array 110 in square feet. Typical values of V₀ are 0-4 CFM/ft², but may be higher.

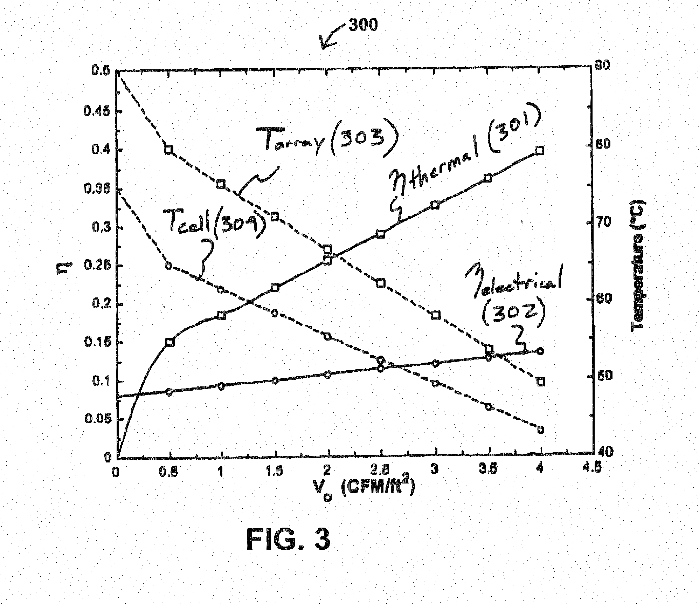

FIG. 3 is a sample graph of the efficiency of solar modules (both thermal and PV) as a function of volumetric fluid flow under the array, according to an embodiment of the invention. A graph such as described may apply to, for example, a system such as described with an embodiment of FIG. 2, as the array 110 is configured to supply space heating and water heating to a structure in addition electrical power generation. As such, in describing the graph 300 of FIG. 3, reference is made to elements of FIG. 2 (and thus) FIG. 1B) for descriptive purposes.

The graph 300 is representative of array 110 under the following conditions: (i) low wind-speed (around 5 MPH), (ii) solar irradiance is at a peak 1,000 W/m2, and (iii) ambient temperature is at 25 C. Actual performance of array 110 may be influenced by these and other variables. However, the graph 300 illustrates the opposing trends of efficiency and array outlet temperature which is inherent in use of the array 110. Both high temperature and high efficiency are desirable, but in a system such as described by FIG. 2, one comes at the expense of the other. To achieve high temperatures, the flow rate of fluid 122 needs to be slow, which negatively impacts both thermal and electrical efficiency.

In greater detail, graph 300 plots efficiency values against the volumetric flow of fluid 122. Under the stated conditions, Line 301 illustrates the thermal efficiency of the modules 125 in array 110 ("thermal efficiency ηₜₕₑᵣₘₐₗ"), Line 302 illustrates the electrical efficiency of the PV modules 124 in array 110 ("electrical efficiency η_{electrical} "), Line 303 illustrates the outlet temperature of the thermal modules 124 ("T_{array} "), and Line 304 illustrates the mean operating temperature of the PV modules 124 in array 110 ("T_{cell}"). Increase in the volumetric flow rate of fluid 122 may be provided by, for example, engaging a blower on to direct ambient air under the array 110. The thermal and electrical efficiencies of Lines 301 and 302 are defined respectively as the thermal and electrical production of the PVT array 110 divided by the incident solar radiation on the array. These variables are functions of windspeed, solar irradiance, ambient temperature and the physical construction of the array. As such, FIG. 3 is merely representative of trends for a typical PVT array 110 operating under conditions such as stated.

FIG. 3 illustrates the effect of ventilation rate (V₀) on key operating parameters of the array including the outlet temperature of the array T_{array} 303 that would be measured by sensor 251 and the mean operating temperature of the cells T_{cell} 304 within the PV modules 124.

Both the electrical efficiency η_{electrical} 302 and thermal efficiency ηₜₕₑᵣₘₐₗ 301 of the array increase with increasing ventilation rates (V₀). With respect to the electrical efficiency η_{electrical} 302, the increase in efficiency is due to the decrease in the cell temperature 304 that occurs at higher ventilation rates. It is a well known phenomenon that the efficiency of crystalline silicon PV modules increases by as much as 0.5% with every 1 °C drop in T_{cell}. With respect to thermal efficiency ηₜₕₑᵣₘₐₗ 301, the increase in efficiency may be attributed to the decrease in operating temperature of the PV modules 124 and thermal modules 125 as indicated by the reduction in outlet temperature T_{array} 303. This in turn reduces thermal losses from the array 100 to ambient. A further effect that increases thermal efficiency ηₜₕₑᵣₘₐₗ 301 is the increase in turbulence of the air stream (i.e. fluid 122) at high flows that promotes heat transfer between the modules and air stream.

Optimization of energy production from the array 110 requires that the service temperature demanded from the array in the form of T_{array} 303 be balanced against the operating efficiencies of both the thermal and electrical components (ηₜₕₑᵣₘₐₗ and η_{electrical}). However, embodiments described herein recognize that an attempt to optimize for efficiency alone would result in values of T_{array} that are too low to service any of the thermal loads at the target location 152. Rather, embodiments factor in criteria that includes overall efficiency, cost (or cost savings) in servicing the energy loads of the target location 152, and the overall amount of thermal or electrical energy that is desired. Controller 150 may weight such criteria in balancing utilizable temperature levels and operating efficiencies when determining the ventilation rate (V₀) at which to operate the array.

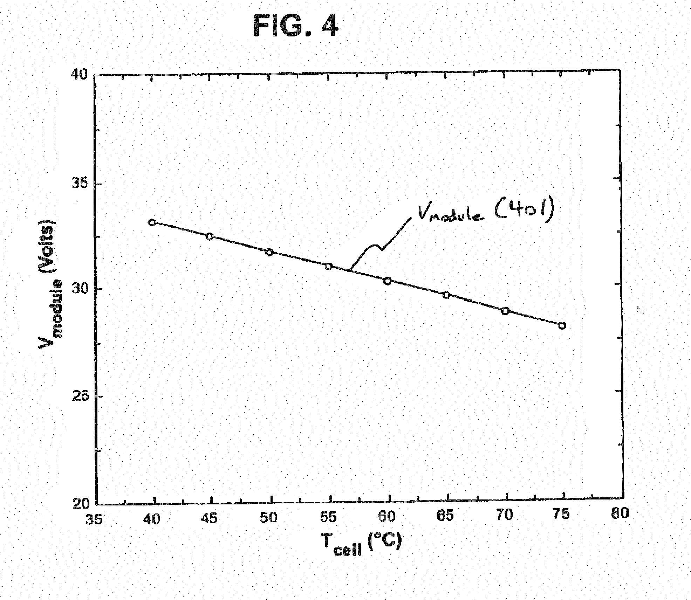

FIG. 4 illustrates the typical operating voltage V_{module} 401 of the PV module 124 in array 110 based on cell temperature T_{cell} such as depicted in FIG. 3. A portion of the decrease in efficiency of the PV module 124 at high operating temperatures illustrated in FIG. 3 is related to the reduction in operating voltage of the module V_{cell}.

In regards to FIG. 3, there is a continuous and near linear relationship between PV module temperature T_{cell} 304 and operating efficiency η_{electrical} 302. However, there are also absolute operating limits on the PV modules 124 beyond which array output degrades significantly or completely. One example of an operating limit for an array of PV modules 124 is the voltage window for an inverter that converts the DC power generated from the PV modules to AC power of the utility grid. Most inverters have a range of voltages they are capable of operating within, and cannot operate outside this range.

The effect of PV module temperature in the form of T_{cell} on PV module voltage V_{module} 401 is illustrated in FIG. 4. The effect differs for different styles of PV module construction, but the trend is representative as a decreasing module voltage V_{module} at elevated temperatures of T_{cell}.

At high levels of solar irradiance and elevated ambient temperatures, the module operating voltage V_{module} may fall below the operating voltage range of the inverter or other loads that would utilize the electrical energy from the PV modules 124. In such scenarios, the operating efficiency η_{electrical} of the PV modules may decay non-linearly to the point where their output is unusable due to the low voltage supplied from the PV modules 124. Ideally the selection, sizing, and parallel or series wiring of the PV modules ensures that these low voltage levels never occur. However, specific module designs and array layouts sometimes necessitate lower voltage arrangements than desired. Such low voltage arrangements can be aggravated by high ambient temperatures under peak solar irradiance and can go even lower if the array is partially shaded.

In conventional arras that lack airflow control or use, there is no mechanism that can be employed to remedy the drop in V_{module} and the only solution is to avoid array configurations or placements that would result in low voltages or partial shading. However, in an embodiment such as described in FIG. 1B, the PVT array 110 the PV module temperature T_{cell} 304 (FIG 3) may be regulated by varying the ventilation rate Vₒ of the array. Therefore, if the operating voltage of the PV module V_{module} were to approach a low operating limit, it would be possible to increase the ventilation rate Vₒ in a specific effort to maintain V_{module} within a proper and desired operating range.

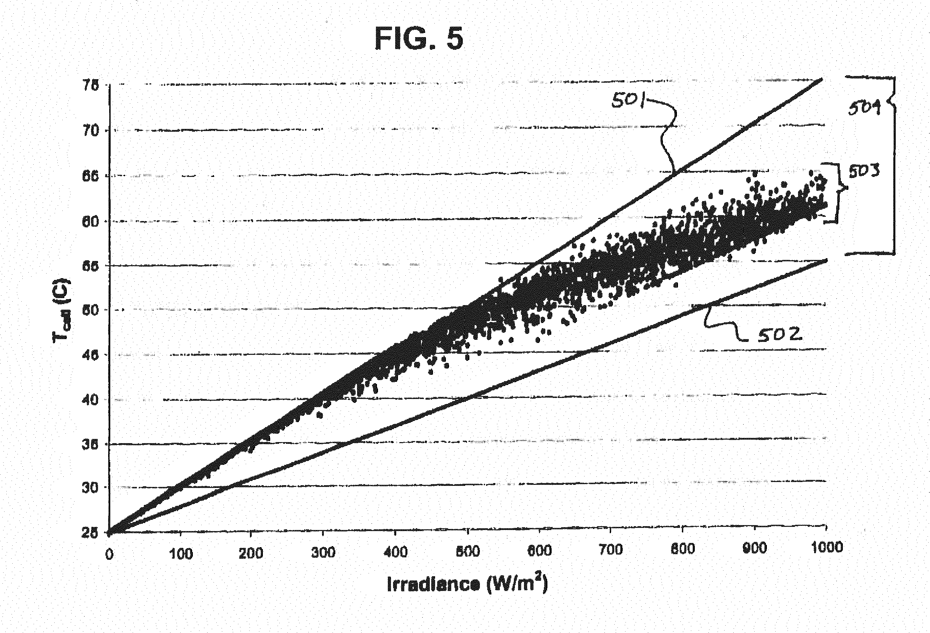

FIG. 5 illustrates the practical operating range of PV module temperatures T_{cell} in arrays of PV modules 124. Under a conventional approach, the module temperatures T_{cell} is primarily governed by ambient temperature and solar irradiance (rather than affected by, for example, underlying airflow). FIG. 5 represents a chart of T_{cell} against irradiance at an ambient temperature of 25 C for three different scenarios.

The upper range of PV module temperatures is defined by line 501, which is representative of Building Integrated Photovoltaics (BIPV) where PV modules are mounted directly against the building surface. Typically, in such mounting schemes, there is no ventilation on the back side of the PV modules. The lower range of PV module temperatures is defined by line 502, which is representative of free-standing PV modules where both surfaces are ventilated by ambient wind. These arrangements represent practical limiting temperature scenarios for conventional arrays of PV modules. The difference 504 between the two lines defines a practical range based on the provided scenarios.

The operating range of PV module temperatures T_{cell} for a PVT array is illustrated by operating points 503, based on an operating environment where the array is driven to supply DHW and space heating (e.g. such as described with an embodiment of FIG. 2) The PV module operating temperature T_{cell} stays high and follows the BIPV curve 501 until an irradiance of approximately 400 W/m². At this point the blower 204 (see FIG. 2) may be engaged to deliver thermal energy from the array 110 so as to begin cooling of the PV modules 124. The operating temperature 503 for the PV modules 124 continues to depart from the BIPV curve 501 and trends towards the free-standing curve 502 as irradiance increases and blower 204 increases the ventilation rate (Vₒ) to recover additional thermal energy from the array 110.

While the operating temperature curves of the BIPV 501 and free-standing 502 configurations are determined by their physical construction, the operating points 503 of the PV modules 124 within array 110 are governed primarily by the ventilation rate Vₒ of the array. Use of ventilation rate Vₒ allows the thermal response of the PV modules in array 110 to be decoupled from the physical arrangement of the array and allows the blower 204 to regulate PV module temperature T_{cell} within the broad range defined by 504 to achieve a desired profile to temperature T_{cell}, and thereby voltage V_{cell}, and efficiency η_{eletrical} of the PV modules 124.

One or more embodiments recognize that a controller, or control system, for use in an array 110 (such as described with FIG. 1B) requires considerations for the use of both thermal and electrical output. Whereas a traditional controller of a PV-only (i.e. electrical) array typically operates on a single objective such as maximizing output of the PV modules, a PVT system controller has to optimize among and between multiple potential modes of operation. In some cases the modes are discrete and separate such as providing either space heating or DHW production, but in many cases they are directly coupled.

An example of coupled operating modes would be, with reference to the system of FIG. 2, the system performing DHW production through the heat exchanger 203 at the same time as providing space heating through the space conditioning vent 212. Depending on the blower 204 speed, pump 216 operation and damper positions (205,206), the controller 200 is capable of varying the relative production of DHW or space heating.

According to an embodiment, an additional coupling is possible with the array 110, where thermal energy generation affects the PV module temperature T_{cell} 304, and thus electrical efficiency η_{electrical} and production. In one embodiment, the controller 200 optimizes the operation of PVT arrays 110 based on criteria such as cost savings or energy production. With regard to cost savings, for example, the cost savings may refer to how much savings an operator of the array 110 may achieve from having to purchase energy from a utility company or other resource. Such an optimization may extend further than total energy production, as the cost of energy from a utility may vary in the day and be affected by other operational parameters.,

Optimizing the total net production from the PVT array 110 in terms of energy or cost savings is a complex task. To properly service the various thermal loads that may be associated with the target location, the controller may need to determine the necessary array exhaust temperature T_{array} required to service any particular load and the sequencing and modulation of the thermal energy output from the array 110 to the various loads.

Further optimization of the array 110 in regards to the optimal generation of energy from the array, and distribution of output energy to the various loads, may be affected by parameters that include (i) operating hardware of the installed system, (ii) presence of individuals within the conditioned space, (iii) use patterns for DHW, (iv) electrical power demands, (v) costs of non-array produced energy, (vi) current and predicted weather data. Other embodiments provide for use of other pertinent information enabling programmatically determined control decisions in the operation of the PVT array 110 with the goal of minimizing energy costs.

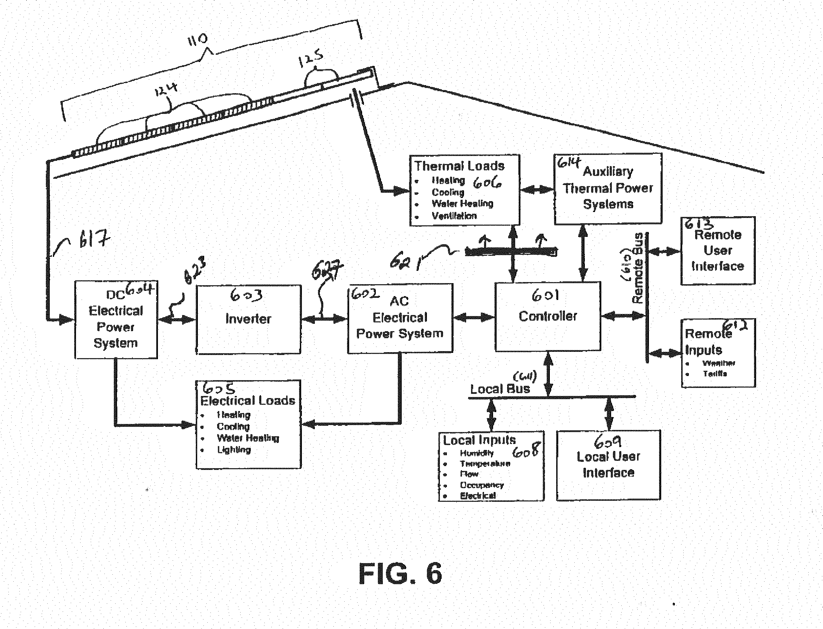

FIG. 6 is a block diagram illustration of a control system, as described with embodiments of the invention. A system includes a controller 601 and control equipment 621 which combine to manage distribution and use of thermal energy output from array 110 to anyone or more thermal loads 606. The control equipment 621 includes hardware, firmware and/or software that is controllable by controller 601. As described with an embodiment of FIG. 2, examples of control equipment 621 may include (i) equipment that causes airflow 122 under solar array 110 (e.g. blower 204), (ii) sensors, including temperature sensors (e.g. sensor 251), for reading information about incoming fluid 122 or information about fluid downstream in usage by the system, (iii) heat exchanges, and (iv) dampeners and other equipment for directing fluid 122 internally. Additionally, controller 601 may be configured to interface with electric power systems, thermal components, user data, and a wide range of inputs within the system and the target location of the array 110.

In one embodiment, the array 110 produces electrical power 617 from the PV modules 124 which is fed into the DC Electrical Power System 604. The DC electrical power system 604 outputs DC power 623, which may then be fed either directly into electrical loads 605 that can operate on DC power, or to an alternating current inverter 603. The inverter 603 may convert DC power 623 to AC power 627. The AC power 627 may be supplied to the AC electrical power system 602. The AC power 627 may then be fed either directly into electrical loads 605 that can operate on AC power, or back onto the utility grid. The DC electrical power system 604, Inverter 603, and AC electrical power system 602 may be interfaced with the Controller 601. Depending on the inverter capability, information regarding both DC 604 and AC 602 electrical power systems may be queried by the controller 601 from the inverter 603. Alternately, transducers may be placed on the DC electrical power system 604 or AC electrical power system 602 to determine electrical production from the array 110, or consumption from the various electrical loads 605.

The controller 601 also interfaces to the thermal loads 606 including heating, cooling, water heating, ventilation systems and auxiliary thermal power systems 614 such as boilers, furnaces, air conditioners, heating elements, and other devices that can supply the thermal loads 606 in tandem with the PVT array 110.

Local inputs 608 may include, for example, humidity, temperature, flow rates, occupancy of the structure, electrical demand, and other information of a nature local to the structure that can assist in the ability to optimize array 110 performance and load management through appropriate control strategies. The system may also have a local user interface 609 for direct communication with the controller 601 or interfaced devices such as the inverter 603, electrical power systems 602, 604 and auxiliary thermal power systems 614.

A remote data bus 610 enables communication of all remote inputs and remote user interface through any remote communication protocol. Examples of the remote communication protocol include wired and wireless Ethernet, mobile phone networks, satellite, and other communication protocols. A local data bus 611 provides the communication path for local inputs 608 and user interface 609 to the controller 601 and between devices. It may be possible that both the remote and local bus 610,611 use the same communication protocols. Either bus 610,611 may consist of one or more protocols operating in tandem to establish communications with separate devices.

According to an embodiment, a dedicated remote inputs 612 may be provided for the remote bus 610 to enable access to information such as weather data or tariff rates of utilities. The remote inpuits 612 may provide an automated and programmatic mechanism to provide such information to controller 601 along with other relevant information.

Still further, one or more embodiments provide for other types of data to be accessed or provided to the controller 601 through the remote user interface 613. The remote user interface 613 may allow the user to enter data or parameters into the system controller or other devices in communication with the controller 601.

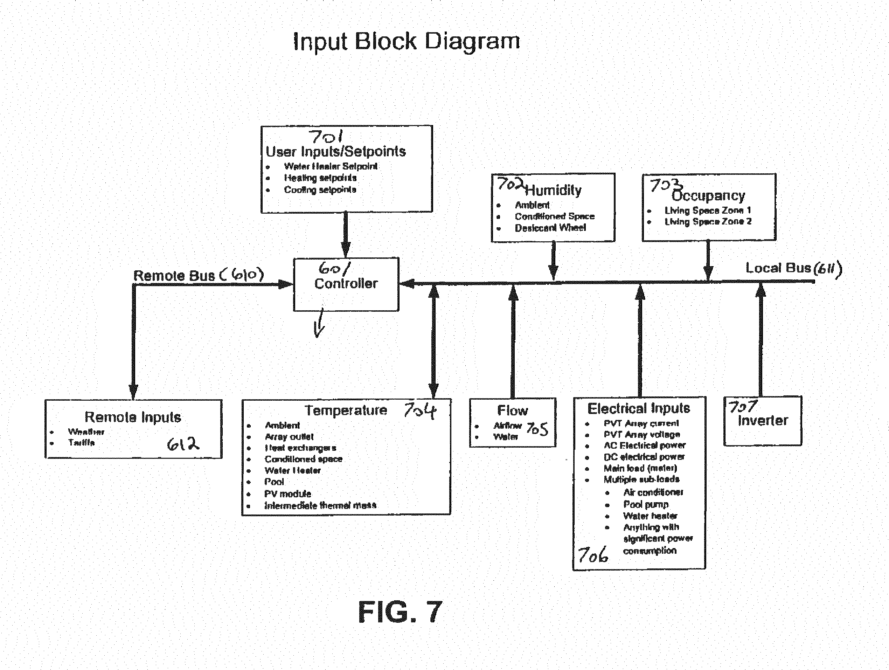

FIG. 7 illustrates a block diagram of components that may be accessed by a controller, in accordance with one or more embodiments of the invention. With reference to an embodiment of FIG. 6, controller 601 receives many inputs from a variety of local sensors and through the remote and local busses 610, 611. Access to system data and information may be relevant to the ability to create control strategies and algorithms that optimize system performance. As described, the inputs may be in the form of information, including User Inputs/Setpoints 701, humidity input 702, occupancy information 703, temperature information 704, flow information 705, electrical inputs 706, and inverter data 707.

In an embodiment, controller 601 receives User Inputs/Setpoints 701 through the local user interface 609 or the remote user interface 613. Examples of User Inputs/Setpoints 701 may include occupancy status, water heater setpoint, heating and cooling setpoints for the conditioned space, and other operational setpoints.

Humidity input 702 may be provided through sensors that are positioned to detect humidity from, for example, ambient air, the conditioned space, and/or airstreams within the systems that may include thermal storage, heat exchangers, desiccant wheels or heat recovery systems.

Occupancy information 703 may be automatically sensed by ultrasonic or infrared sensors typically used in motion detectors. The structure can be divided into zones and occupancy can be reported to the controller by zone. As an alternative or addition, occupancy information 603 may be inferred from, for example, usage of appliances through a monitoring of electrical loads 605.

Temperature information 704 may be collected from various sources. One or more embodiments provide that the temperature information may be provided by measurements that are made for a determined optimal operation of the system. With reference to an embodiment of FIG. 7, the temperature information 704 includes, for example, the reporting of ambient air temperature through sensor 255 (FIG. 2), array output temperature through sensor 215 (FIG. 2), the temperature after fluid 122 passes through heat exchangers at sensor 252 (FIG. 2), air temperature in conditioned space 221 through sensor 256(FIG. 2), temperatures in the water heater through sensors 253,254 (FIG. 2), and other temperature measurements as may be required by the system.

Flow information (and/or inputs) 705 may include information that identifies or indicates the volume of air flowing through a particular duct or section of the system and the flow of liquids in hydronic loops. Flow information 705 may be in various forms, such as in the form of actual mass or volumetric flows, and/or in the form of simple on/off indicators as to whether flow exists or not.

Electrical inputs 706 include, for example, current and voltage provided by the PV modules 124 (Fig. 1B), outputs from DC electrical power system 604(Fig. 6), outputs from AC electrical power system 602, the main meter for the structure, and the load demand for individual or multiple sub loads 605. Examples of sub loads 605 include air conditioners, pool pumps, lighting, water heaters and/or anything with electrical power consumption to be metered.

The controller 601 may also interface with the inverter 603 to obtain operating information regarding the electrical performance of the inverter, the current and voltage characteristics of PV modules 124 connected to the inverter 603, and the export of power from the inverter 603 to the AC electrical power system 602.

In addition, the controller 601 can receive data from remote inputs. The data from remote inputs may include, for example, weather data, energy pricing, and tariff schedules from the utility for energy. These and other data sets may be provided to the controller over the remote bus 610, user inputs 701, or potentially the local bus 611.

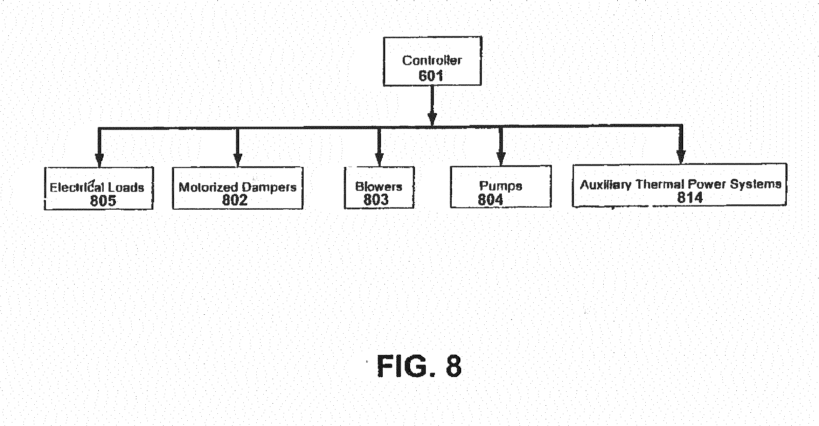

FIG. 8 is a block diagram representation of an output block for the controller 601 (FIG. 6), corresponding to physical elements of the system that can be used to perform optimization operations. The physical elements may not only optimize generation of the PVT array 110, but also facilitate or enable control and regulation of any electrical loads 805 or components of the thermal power systems 6814.

In one embodiment, controller 601 is connected to regulate or modulate any of the electrical loads 805 connected to the DC electrical power system 604 (FIG. 6) or AC electrical power system 602 (FIG. 6), as indicated by output block 805. The controller 601 may also operate any combination of blowers 803 and dampers 802 to move and direct airstreams to transfer thermal energy. Operation of pumps through output block 804 is also possible. Control over auxiliary thermal power systems 805 is also possible and allows coordination of generation from the array 110 and these backup energy systems. Additional output blocks may be provided as necessary for the controller 601 to interface with and influence any system components that may impact the generation or use of energy within the structure.

One or more embodiments provide for using controller 601 in order to implement strategies or optimization schemes for different criteria. In an embodiment, the controller 601 may simultaneously assess the demands of the various loads within the target location. These loads may include, for example, water heating, space heating, ventilation, and electrical consumption. The loads may be assessed in tandem with (i) the ability of the array 110 to provide the electrical and thermal power outputs to service these loads, and optionally (ii) in connection with criteria or parameters for optimizing the electrical/thermal outputs.

Under an embodiment, the optimization required by the controller 601 can be divided into several components. A first part of the optimization provides for the controller to set the ventilation rate Vₒ for the array 110 which is dictate the thermal and electrical operating efficiencies (ηₜₕₑᵣₘₐₗ and η_{electrical}), and therefore array outputs at a given set of ambient conditions. Setting of the ventilation rate Vₒ may include one or more of the following considerations:
(i) For any thermal load, the controller 601 should assess the temperature at sensor 251 (FIG. 2) necessary at the array outlet 201 (FIG. 2) required to service the particular load. For practical purposes the array outlet temperature at 251 should exceed the load temperature by a reasonable margin to promote heat transfer. Examples of representative load temperatures would be the temperature of the water heater at sensor 253 (FIG. 2) or conditioned space 221 (FIG. 2), but may be that of any load.
(ii) The controller may assess whether it can provide this array outlet temperature 251 under prevailing ambient conditions such as solar irradiance, ambient temperature 255, and other conditions such as wind speed that might effect performance of the PVT array 110. In one embodiment, this assessment is made responsive to the assessment of the thermal load. The assessment for the array outlet temperature at sensor 251 may be made by varying the ventilation rate Vₒ and monitoring outlet temperature at sensor 251, or by referencing a known performance map for the array 110 that is stored in the controller which describes operation over a broad range of environmental conditions.
(iii) The controller 601 may subsequently or responsively assess the combined thermal and electrical operating efficiencies (ηₜₕₑᵣₘₐₗ and η_{electrical}) that govern the overall efficiency, as well as the output of the array 110 at the operating temperature required by the loads the array 110 is capable of servicing.

In an embodiment, a second part of the optimization is related to how controller 601 sequences or modulates the thermal energy provided at the array outlet 201 among the various thermal loads. In most physical layouts of the loads, such as those depicted in FIG. 2, the system is capable of providing DHW service and space heating simultaneously. In regards to FIG. 2, the controller 601 may regulate the amount of energy provided to the water heater 217 by modulating the operation and speed of pump 216 to extract varying amounts of energy from the air stream through heat exchanger 203. Pulling more energy from the airstream for the water heater 217 using heat exchanger 203 leaves less energy for space conditioning to be provided through damper 206 and vent 212 into the conditioned space 221.

The controller may subsequently decide upon which use of the energy is more important in determining the modulation of energy between the loads. In the case of the embodiment illustrated with FIG. 2, in which the backup heating for the water heater 217 is be provided by an electric element 220, it may be more critical to supply this load on first priority so as to prevent electrical consumption by the electric element 220. Such an optimization scheme may best be implemented if the backup heating system for the conditioned space 221 is provided by a high efficiency furnace using lower cost natural gas. However, if the backup means for heating system is provided through electrical resistance heating, then the cost of providing energy to water heater 217 or conditioned space 221 may essentially equal each other. The controller 601 may then determine which load to service to maximize array output.

Another optimization scheme or sub-scheme may be provided in connection with the thermal production and electrical production of the array 110. Embodiments recognize that maximizing PV production at the expense of thermal production would, in many cases, demand a maximum ventilation rate Vₒ by blower 204 (FIG. 2), at least to the practical point where the gains in electrical output and efficiency η_{electrical} are mitigated by parasitic consumption in the blower 204. However, operating the blower 204 at high ventilation rates Vₒ results in relatively low outlet temperatures for the array. The array outlet temperature at sensor 251 in these scenarios may be below a utilizable temperature for space conditioning or DHW production. For instance, a case could be imagined where ambient temperature is 5 C, and where the blower 204 operates at full speed to maximize PV output. In such a scerio, the array outlet temperature at sensor 251 may be 18 C, which is not sufficient to provide space heating. By lowering the blower 204 speed slightly, it may be possible to achieve 26 C array outlet temperatures at sensor 251 that only slightly lowers efficiency and production of the PV modules 124, but provides a significant contribution to heating and ventilation of the conditioned space 221.

In an embodiment, controller 601 may be configured to perform multivariate optimization in the control of the speed of the blower 204, pump 216 and/or operation of dampers 205 and 206. Such control may be used to maximize the net energy production of the Array 110 in both thermal and electrical energy production. It should be noted that the controller does not necessarily discretely change operating modes from 100% service of any one mode to another, but instead may often perform triple-generation in the form of modulating and optimizing the energy gains of all three modes of operation simultaneously. This is as a result of array 110 being capable of providing electrical power to the DC electrical power system 604, DHW production, and space conditioning simultaneously. The controller 601 may be structured to give preference to one particular mode of generation over another through variable speed operation of the blower 204 and pump 216, as well as effecting the positions of the dampers 205 and 206.

With regards to operation of controller 601, the controller may be equipped to implement various schemes that factor various priorities and variables. These schemes may range from simple weighted priorities of each load on the system to a complex multivariate analysis of system efficiencies, costs of providing auxiliary energy, physical characteristics of the structure including occupancy, load profiles, and thermal response of the structure. Additionally, one or more embodiments provide that weather data is used to anticipate and estimate energy production from the Array 110, as well as demands of the loads that may be comprised of electrical loads 605 and thermal loads 606 that are sensitive to weather.

Some representative examples of how these inputs and factors may be weighted into the controller's decisions on how to optimize operation of the system are provided in the following.

Embodiments recognize benefits in the controller 601 knowing the source and efficiency of the auxiliary thermal power systems 614 that provide energy to the loads in tandem with the array 110. With respect to FIG. 2, for example, the auxiliary thermal system for the water heater 217 is the electric heating element 220, but may take other forms. In such cases, controller 601 may operate to prevent or reduce the auxiliary thermal power systems 614 from operating to consume energy in the form of electricity, natural gas, propane, or other base fuel. The optimization scheme of controller 601 may include information that identifies the auxiliary thermal power systems, as well as their operating characteristics and energy consumption costs. Additionally, knowing the cost of the fuel to operate the backup systems when combined with the efficiency of the devices may assist the controller 601 in determining the cost of providing auxiliary power to any load. The types of auxiliary thermal power systems 614, their efficiency, and fuel source may be programmed into the controller 601 using any of the the remote user interface 613, local user interface 609,or other means. Likewise, cost of the fuel used to operate these systems may be programmed into the controller 601 through similar means, or queried as a remote input 612.

In addition to the base cost of fuels, fuel costs may include time-variant components, in which the cost of the energy varies by time of day, or time of year. As an example, several electric utilities offer a time of use rate where electricity may cost $0.29/kWh on-peak from 12:00-19:00 and $0.09/kWh off peak during the remaining hours. Superimposed on this rate schedule can be a shift in base electricity cost during summer and winter period. Rate schedules like these are often employed and advantageous for installations of PV modules 124 that generate energy during the on-peak period.

One or more embodiments configure controller 601 to be aware that the structure (of target location 152) is utilizing such time-variant rates. In such an embodiment, controller 601 may be configured to optimize for maximum electrical generation from the PV modules during the on-peak time and act to defer any loads using electricity until after peak. As an example, if the auxiliary thermal power systems 614 includes a (i) furnace for heating the conditioned space 221 by natural gas, and (ii) a water heater 217 powered by an electrical element, then controller 601 may be configured to optimize for DHW production during the on-peak time to prevent the electrical element from consuming on-peak electricity, while allowing the auxiliary system for heating the conditioned space 221 with natural gas to operate (which traditionally does not have a significant time-variant rate).

While current time-variant rates are mostly structured by set times of the day, there is movement in markets towards 'real time pricing' in which a spot market approach is used to set rates in real time. In such a case, the controller 601 may be configured to access real time rates as a remote input 612 over the remote bus 610, and to factor the real-time rates in optimizing the mix of thermal and electrical energy production from the array 110. This may be done as part of an optimization scheme to minimize operating costs of the auxiliary thermal power systems 614, AC electrical power systems 604 servicing the loads in real time.

Still further, another optimization scheme may be provided as follows. In some utility rate structures the cost of energy is 'tiered' in that a baseline rate is established with escalating tiers of rates beyond the baseline. If the controller 601 has knowledge of the tier structure and energy consumption of the structure, then the controller can implement optimization control based on this usage tiered pricing in its goal of minimizing energy costs. This can be done by giving preference on generation of the array 110 towards those loads whose auxiliary energy systems use fuels whose usage is approaching higher tier rates. The controller 601 may acquire knowledge of the tiered rate structure using the remote user interface 613, remote inputs 612, local user interface 609, or other means. Knowledge of energy consumption to compare against the tiers can be provided to the controller by monitoring the electrical inputs 706 in the form of the main load (meter) or monitoring of sub-loads.

In determining another optimization scheme, one or more embodiments may factor in situations where the utility source has demand charges for electricity that is a fixed charge based upon peak monthly power consumption at the target location 152. Such demand charges can constitute significant portions of the total utility charges for the target location 152. Since the controller 601 has the capacity to monitor the electrical production from the array 110, as well as the consumption of various loads through input block 706, controller 601 may be configured to minimize coincident net power consumption. This results in lowering the demand charge, and therefore total energy costs.

With regards to electrical energy output of the array 110, the physical characteristics of the structure do not often impact the energy production other than physically supporting the array. With regards to the thermal energy output of the array 110, the physical characteristics of the structure and loads can have significant impacts on energy production of the array 110, as well as the consumption of fuel from the auxiliary thermal power systems 614. These characteristics range from the thermal mass of the conditioned space 221 to occupancy profiles of the structure, and consumption profiles from the water heater 217. A few examples of how the controller 601 may utilize these physical characteristics as part of implementation strategies or optimization schemes are outlined below:

*Space Occupancy:* Numerous mechanisms and means may be used to detect occupancy of the target location 152. In the structure of a home or building, occupancy may be detected with, for example, occupancy sensors 703, although other measurements (e.g. appliance or lighting usage) may also be detected and used. If the structure is determined to unoccupied, the controller may permit the temperature of the conditioned space 221 as monitored by sensor 256 to float outside of the typical range. Furthermore, DHW production may be reduced or even eliminated. Therefore, the controller 601 may maintain the space in a wide, but reasonable temperature range that would minimize energy demands from any auxiliary thermal power systems 614 for space conditioning. In a similar manner, the controller 601 may completely avoid DHW production from both the array 110 as well as from any auxiliary thermal power systems 614. Because electrical production from the array 110 can often be stored on the utility grid as a valuable credit for later consumption, the controller 601 may be configured to optimize efficiency η_{electrical} of the PV modules to create a credit for later electrical demand.

In addition to the two states of the structure being occupied or unoccupied, embodiments recognize that the actual occupancy and load profiles can shift over the course of a day and/or seasonally. For example, in case where target location 152 (FIG. 1B) is a residence of occupants that work elsewhere, there may be high morning and evening demands with few mid-day demands, as the occupants may be at work. Thus, there are anticipated time periods where the conditioned space 221 is empty. In a business setting, the occupancy and loads are typically inverted from this residential case. As a result, the thermal loads such as DHW production from the water heater 217 can be reduced mid-day for a residential setting. Likewise, the temperature of the conditioned space 221 as monitored by sensor 256 may be allowed to swing outside a narrowly controlled range, and the water heater 217 need not be at a full setpoint temperature for DHW service (as monitored by the upper tank temperature 254). By allowing strict setpoints to vary, energy production from the array 110 may be further optimized by increasing the energy that these loads can store, as well as the use of auxiliary thermal power systems 614 is minimized by reducing setpoints.

As an example of a load profile strategy, water heater 217 may be assumed to have sufficient thermal capacity to provide morning showers for the occupants. After morning showers, however, the temperature at the top of the water heater 217 as monitored by sensor 254 becomes lower than a user supplied setpoint 701. Embodiments recognize that instead of using the electric element 220 to recharge the water heater 217 in the early morning before energy is available from the array 110, the controller 601 may be configured to infer the occupancy habits of the structure, Specifically, controller 601 may determine when the target location (e.g. residence) is unoccupied (e.g. starting at mid-morning) and then disable the electric element 220 in anticipation that energy would be available from the array 110 to heat the water heater 217 a few hours later. Thus, the controller 601 may be configured to recognize that the hot water does not need to be immediately replenished, but rather can be replenished later in the day when more energy is available from the array 110. In a similar manner, the controller 601 may allow the temperature of the conditioned space 221 as monitored by sensor 256 to drop during unoccupied times.

As an alternative or addition, the controller 601 may permit heating the conditioned space 221 above the desired setpoint temperature during the middle of the day knowing that the temperature in the conditioned space 221 as monitored by sensor 256 would reach a suitable level when the occupants returned. In this way, controller 601 can use the conditioned space 221 as thermal energy storage. Such usage would not normally be possible if strict setpoints of the temperature in the conditioned space 221 were maintained at all times.

The most direct method of inferring occupancy of the structure is through the use of occupancy sensors 703 that can communicate over the local bus 611 with the controller. However, an embodiment recognizes that occupancy and usage may be inferred by other system parameters accessible to the controller 601 through, for example, the local bus 611. One such method would be to evaluate changes in the power requirements of any electrical loads 605, such as lighting or usage of major appliances (e.g. washing machine) that would be associated with occupancy and monitored through electrical inputs 706.

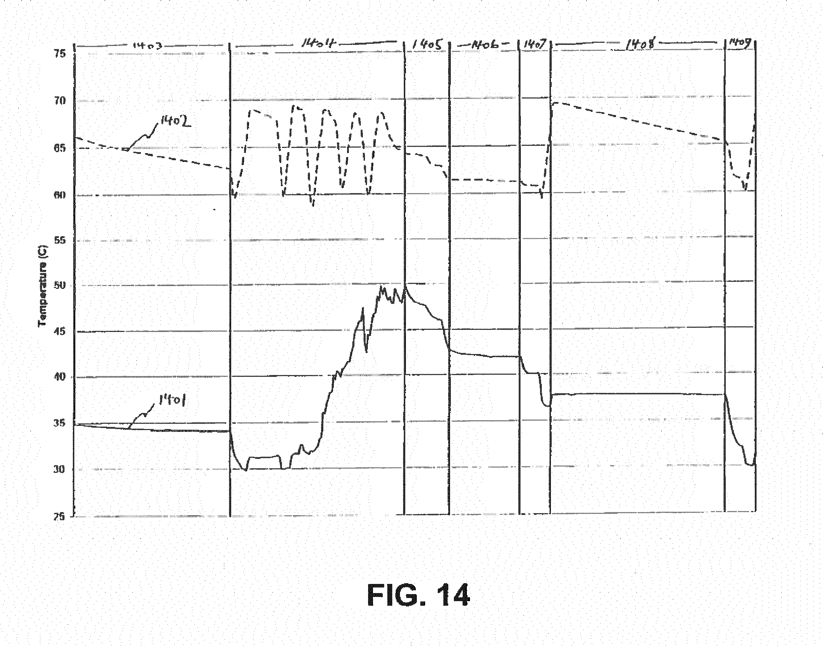

FIG. 14 illustrates a graph of temperature readings over time, as part of a technique by which controller 601 is able to infer occupancy of the target location 152 and usage of electrical and thermal loads. In particular, FIG. 14 provides a plot of readings from the upper temperature sensor 254 and from the lower temperature sensor 253 of the water heater 217. These readings are illustrated by trend lines 1402 and 1401 respectively ("water temperature trend lines"). Usage patterns of hot water draws from the water heater 217 can be inferred by monitoring water heater temperature as a function of time as indicated by trends 1401,1402. FIG. 14 plots these trends over a typical day of usage for the water heater 217.

The period indicated by 1403 is indicative of little to no draws from the water heater 217 during the early morning hours. This can be inferred by the steady and minimal changes in the water temperature trend lines 1401,1402 that can be described by the change in temperature (dT) with respect to time (dt) or as dT/dt. The minimal decay in DT/dt during period 1403 is indicative of standby heat losses from the water heater 217 through its insulating jacket.

The rapid dT/dt at the start of period 1404 is indicative of a hot water draw from the water heater 217 by an occupant. Here, the introduction of cold water into water heater inlet 218 from city mains or a well causes a rapid drop in water temperature trend lines 1401 and 1402, as hot water is provided at the outlet 219. This draw is large enough to trigger the heating element 220 to enable to meet an occupant setpoint of water heater temperature (in this case 60 °C). The enabling of the heating element 220 triggers a positive dT/dt of water temperature trend line 1402 as the element 220 warms the upper portion of the water heater 217. Another cycle of this draw pattern immediately follows before the PVT array 110 begins adding energy to the base of the water heater 217 as indicated by the positive dT/dt of water temperature trend line 1401. Throughout the entire period of 1404, which occurs mid-day, multiple draws are made from the water heater 217, as indicated by negative and high rates of DT/dt of both water temperature trend lines 1401,1402. During the same period we see addition of heat from both the array 110 as well as the heating element 220 as positive rates of dT/dt of water temperature trend lines 1401 and 1402 respectively.

Period 1405 occurs after the array 110 has stopped charging the water heater 217 as provided by the termination of a rising dT/dt of water temperature trend line 1401, with two small draw events indicated by brief periods of negative dT/dt of water temperature trend lines 1401 and 1402.

Period 1406 is indicative of little to no draws from the water heater 217 analogous to period 1403.

The brief period 1407 indicates two successive back to back draws represented by the negative rates of DTldt of both water temperature trend lines 1401,1402 with the heating element 220 being enabled at the end of the period to meet the setpoint.

Period 1408 is indicative of little to no draws from the water heater analogous to period 1403 and 1406.

Period 1409 indicates two successive back to back draws represented by the negative rates of DT/dt of both water temperature trend lines 1401,1402, with the heatingelement 220 being enabled at the end of the period to meet the setpoint. This most likely represents the morning shower draw profile of the next day.

As illustrated by the previous descriptions, controller 601 may be configured to evaluate periods of hot water demand from the water heater 217 by evaluating the changes in temperature with respect to time (dT/dt) of the sensors 253,254 placed on the water heater 217. This assists the controller 601 in evaluating not only hot water demand and adjusting its priority as a load, but can also be used by the controller to infer occupancy of the structure. If hot water is being consumed, then controller 601 may infer that the target location 152 is occupied. The counterpart may also be used-if there are no hot water draws, then controller 601 may infer that the target location is unoccupied. This use of draws from the water heater 217 may compliment or replace the need for dedicated occupancy sensors 703. In addition to inferring water heater 217 draw from water temperature trend lines 1401, 402, a flow meter as part of input block 705 may also be used.

In addition to an inference of periods of draw from the water heater 217, the dT/dt of the water temperature trend lines 1401,1402 can also be used to infer the rate and duration of the draw as well. The rate of the draw may correspond to the flowrate at which cold water is introduced and hot water is taken from the water heater 217 through inlet 218 and outlet 219 respectively. Because the water heater 217 contains a relatively fixed mass of water, the rate at which energy is extracted or removed by the draw can be inferred by the rate in change of temperatures monitored by sensors 253,254 in the form of dT/dt. Higher negative rates of dT/dT indicate higher rates of draw from the water heater 217. The duration of the draw can also be inferred from the period where dT/dt of either water temperature trend line 1401,1402 remains negative.

Thus, the water temperature trend lines provided from readings of one or more sensors may be used to infer usage patterns of the water heater 217, which in turn may be used to also infer occupancy patterns of the target location 152. Furthermore, the draw rates and duration of the draw may also be inferred by these same trends and may allow the controller 601 to optimize the heating of the water heater 217 from the array 110, as well as from auxiliary thermal power systems 614 in the form of heating element 220 or other source in combination with various aspects of controller optimizations outlined elsewhere.

As an alternative or addition, one or more embodiments provide that the controller 601 is capable of identifying or otherwise using predictions of approaching weather in the form of anticipated solar irradiance, ambient temperature or other factors that may assist the controller in its operating logic. As one example, the controller 601 may have a default setting where it precludes or disables the heating element 220 in the water heater 217 in anticipation that the array 110 provides the thermal energy. However, the controller 601 may be configured to use weather forecasts to change its default setting(s). If, for example, cloud cover or rain is forecast, the controller 601 may trigger the heating element 220, even before sunrise. When time-variant rates are considered, such a programmatic decision may make the difference between providing energy to the heating element 220 with $0.09/kWh off-peak or $0.29/kWh on peak electricity. Similar examples exist for space heating, cooling, and other loads where weather not only effects potential energy generation from the array 110, but also influences the loads themselves. This is especially the case in the weather sensitive heating and cooling loads.

The controller may gain access to current and future weather data by accessing weather data as a remote input 612 over the remote bus 610.

If access to weather data over the remote 610 or local 611 busses is not possible, one or more embodiments provide for the array 110 to be operated at night to provide an indicator of cloud cover before sunrise. Because the radiative coupling of the array 110 to the night sky is dependent on it 'seeing' the clear night sky, any cloud cover or excess moisture in the ambient air that would be opaque in the infra-red (IR) regime would partially destroy the pre-cooling effect of the array 110 when operated at night. Therefore, a perfectly clear low humidity night would create the largest temperature difference between the array outlet as monitored by sensor 251 and ambient air temperatures as monitored by sensor 255. In contrast, a cloudy humid evening would only create a small differential between these temperatures. This effect can be sampled and recorded by the controller 601 through a short period of blower 204 operation before dawn. Such a recording could allow the controller 601 to make an educated inference as to whether the approaching day might be clear or cloudy.

According to one or more embodiments, a primary optimization goal of controller 601 is matching thermal and electrical generating aspects of the array 110 (i.e. generating assets) to the various thermal loads 606 and electrical loads 605 (i.e. energy consuming resources) of the structure in an effort to maximize generation from the array 110, minimize use of fuel from auxiliary power systems, and maintain occupant comfort. The controller 601 may be configured or programmed to achieve such goals by having access to a wide range of input data on the array 110, loads 605,606, and ancillary data aggregated from the local and remote data busses 610, 611. Based upon these inputs and knowledge of the physical systems, one or more embodiments provide that controller 601 is able to operate the various outputs 605,614,802-804 (FIG. 8) to achieve such a primary goal.

As described, controller 601 may be configured or programmed to optimize system operation based on a range of factors, including utility rates, occupancy profiles, thermal characteristics of the loads, and weather data. While such multi-variate optimization presents significant difficulties for a controller, modem controllers are capable of being expertly programmed to respond to these factors. Furthermore, algorithms and programmatic techniques (e.g. neural networks) exist by which a programmed element such as controller 601 may be designed to learn and adapt to the range of inputs and desired goals. One advantages provided by optimizing the control scheme is that energy production can be increased or maximized, while auxiliary energy consumption and costs may be minimized or reduced.

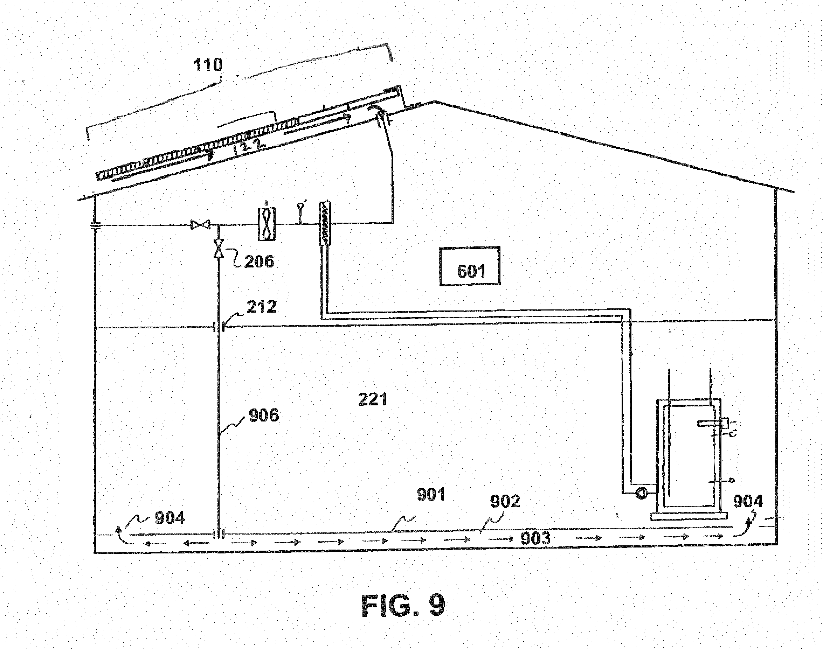

In addition to providing the basic thermal services of space conditioning and water heating as outlined in FIG. 2, an embodiment provides other systems that can effectively be coupled to the array 110 (FIG. 1B) and operated by controller 601. FIG. 9 to FIG. 13 illustrate such alternative systems and implementations.

FIG. 9 illustrates an embodiment in which a space conditioning exhaust can be sent through an Intermediate Thermal Mass (ITM). In one embodiment, space conditioning exhaust may be passed through the vent 212 via dampener 206, then sent through the ITM, such as in a hypocaust configuration, before being exhausted to the conditioned space 221. The hypocaust configuration illustrated in FIG. 9 is composed of an upper surface 901 suspended above an underlying surface 902. As examples, the upper surface 901 may correspond to a floor, and the underlying surface may correspond to a concrete slab. The two surfaces may combine to define an air cavity 903. Under one implementation, space conditioning exhaust (passed through vent 212) is introduced into the air cavity 903 via duct 906. The duct 906 may couple vent 212 to the cavity 903 so as to provide a conduit for exhaust originating from airflow under the PVT array to enter the air cavity 903. As the air stream progresses through the air cavity towards exhaust vents 904, thermal energy is transferred from the air stream to the surfaces 901,902. In this way, the thermal energy can be stored in the surfaces 901,902 and later released to the conditioned space 221.

Such an ITM can be beneficial if the structure itself is of low thermal mass construction such as a wood framed house. If there is no ITM and the structure itself has low mass, then the thermal energy provided by the array 110 may overheat the conditioned space 221. Thus, one objective of the ITM is to store the thermal energy from the array 110 and release it later when heating demands on the conditioned space 221 are higher.

The hypocaust configuration is but one type of ITM that can achieve the above objective. Other types of storage mechanisms, such as pebble beds, may be used. In any configuration of an ITM, controller 601 may be programmed to learn the thermal characteristics of the heat-storing component, and then adjust system operation and control accordingly. As an example, controller 601 may programmatically learn that large amounts of heat may be directed into the ITM without the temperature response becoming immediately apparent in the conditioned space 221 as monitored by sensor 256, as it could be stored by the upper and lower surfaces 901, 902 of a hypocaust, which have thermal mass. The controller 601 can learn the time lag between charging and discharging of the thermal mass by evaluating the time delay required for the energy and temperature inputs to ITM, and by evaluating later changes to the temperature in the conditioned space 221.

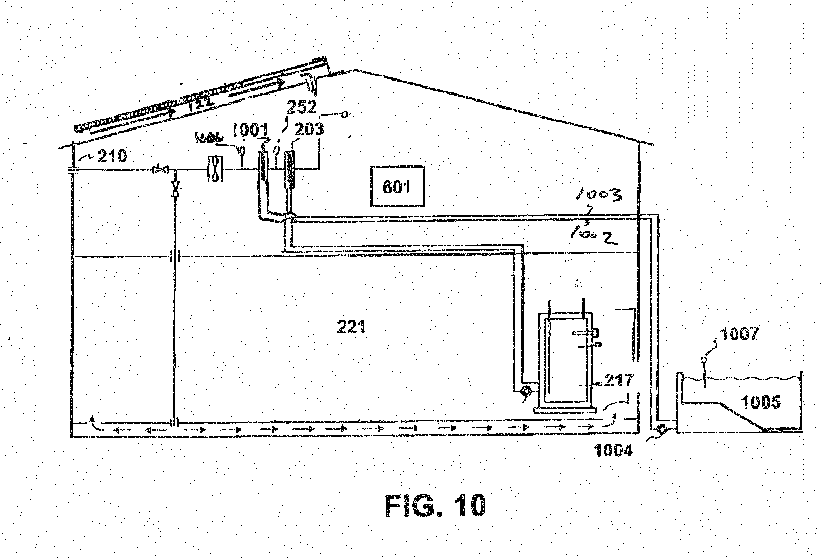

FIG. 10 illustrates handling of an ancillary load in accordance with an embodiment of the invention. An example of an ancillary load may correspond to a pool 1005. Similar to the load of the water heater 217, pool 1005 may be heated through means of a heat exchanger 1001. In one implementation, the heat exchanger 1001 may be placed in series after the DHW heat exchanger 203. The controller 601 may sense that there is sufficient energy available to heat the pool using, for example, the temperature as read by sensor 252. For example, if the temperature read by sensor 252 is greater than a temperature read from a pool sensor 1007, controller 601 may energize pump 1004 to circulate water through the supply and return pipes 1002, 1003 to the heat exchanger 1001. This results in a transfer of energy from the air stream to the pool 1005.

Although a pool is used to illustrate an ancillary load, numerous other kinds of ancillary loads are contemplated. The placement of additional loads or heat exchangers in series, such as that presented by the arrangement of heat exchangers 203 and 1001, allows additional thermal energy to be extracted from the air stream before being exhausted to the conditioned space 221 or ambient through exhaust vent 210.

While PVT combi-systems have the capability to operate independently of a traditional Heating Ventilation and Air Conditioning (HVAC) system, embodiments recognize benefits in the two systems to be interfaced cooperatively operated. Many HVAC systems are of an air based design. This allows them to condition, circulate and filter the conditioned space 221, as well as provide outside ventilation air if necessary. With the installation of an Air Handling Unit (AHU) that accommodates these functions comes a distribution system composed of ducts and potentially motorized dampers to individually condition separate zones of the structure. By utilizing this existing infrastructure, the array 110 may be provided a free and controllable distribution system for the thermal output it wishes to convey to the conditioned space 221.

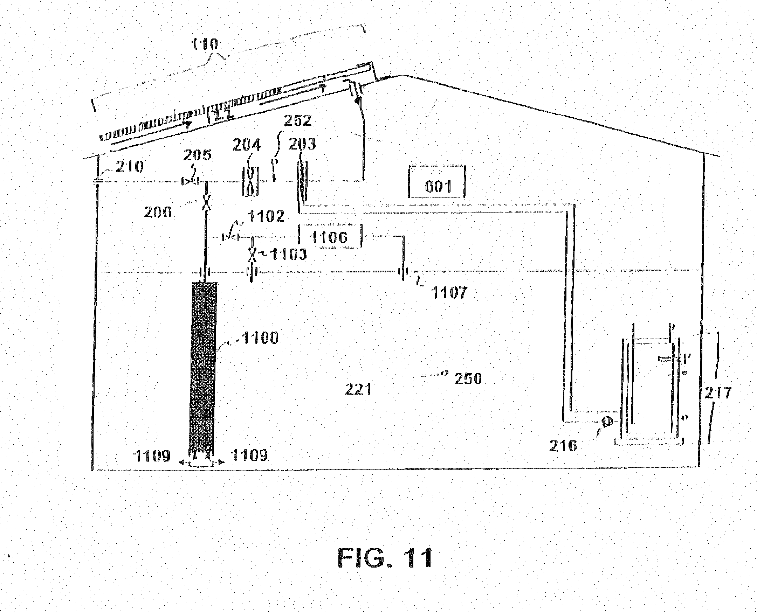

FIG. 11 illustrates an embodiment in which the array 110 is connected to a typical AHU 1106, in conjunction with an Intermediate Thermal Mass (ITM) 1108. Some of the possible cooperative operating modes of this arrangement are described as follows.

*PVT Array to Conditioned Space:* If the controller 601 decides that the thermal output of the array should go directly to conditioned space 221, then controller 601 may close damper 205 and 1103, while opening damper 206 and 1102. This configuration allows the exhaust from array 110 to pass through the AHU 1106 and out through the distribution ductwork 1107. This configuration may be implemented with a blower internal to the AHU 1106 remaining off and the flow provided wholly by the blower 204. Alternately, the blower internal to the AHU 1106 can be engaged in tandem with the blower 204 to provide higher flowrates in this same operating mode. Additionally, the combination of dampers 1102 and 1103 can be modulated to blend recirculating air from the conditioned space with the airstream from the array 110. It is even possible that the blower 204 is left disabled and the negative suction pressure on the back side of the AHU 1106 will establish the desired ventilation flow Vₒ through the PVT array 110.

FIG. 11 shows the ITM 1108 in the form of a vertical pebble bed coupled to the combined system ductwork through dampers 206 and 1102. Charging of the ITM 1108 is possible by operating blower 204 with dampers 205 and 1102 closed and damper 206 open. In this arrangement, the exhaust from array 110 will enter the ITM 1108, transfer heat to the upper section of the ITM 1108, and exhaust at the base through vents 1109.

*Domestic Water Heating:* In either of the array operating modes mentioned above, the controller 601 may enable pump 216 to extract heat out of the airstream for the water heater 217 through the heat exchanger 203 as described previously.

*ITM to AHU:* The energy stored in the ITM 1108 may be utilized by the AHU 1106 at any time by enabling the blower internal to the AHU 1106, opening damper 1102 and closing dampers 206 and 1103. In this configuration, the AHU 1106 will draw air in from the base of the ITM 1108 through vents 1109 upwards to where it exits the top having recovered the thermal energy stored during previous charging cycles. This recovered thermal energy from the ITM 1108 can then be distributed by the AHU 1106 to the conditioned spaces 221 through the distribution ductwork 1107.

*Achieving Cooling Capacity:* In addition to providing heating service, the cooperative interaction of the PVT array 110 and AHU 1106 can also be used to provide cooling service to the conditioned space 221 or to store and release it through the ITM 1108 in virtually the same manner described for the modes described above.

Cooling capacity can be achieved using the same night-time operation of the array 110, as described earlier, to pre-cool ambient air for the conditioned space 221 or ITM 1108. It may be possible in certain scenarios to create such a low temperature in the ITM 1108 during the cooling mode that when air from the conditioned space 221 is drawn through it in discharge mode, it reaches the dew point and condenses within the ITM 1108. This could lead to mold growth and possible air quality issues. Such conditions, although likely rare, could be avoided by monitoring the relative humidity of the air in the conditioned space 221 in addition to temperature with sensor 256. By knowing the charging temperature profile of the ITM 1108 as monitored by sensor 252 during the charging mode, the controller 601 may determine the lower and upper bounds of the temperature profile within the ITM 1108. This temperature range can be compared with the dew point of the air in the conditioned space 221 as monitored by sensor 256. If the inferred temperature profile of the ITM 1108 and the dew point temperature of the conditioned space 221 are too close, the controller 601 may be configured to lock out the ITM from discharging and potentially precipitating moisture within.

*Thermal Purge of ITM:* Embodiments recognize that precipitation may be thermally purged. Such precipitation may occur in the ITM 1108, such as through accumulation during summer cooling operations. A thermal purge can be achieved by heating the ITM 1108 during the daytime with heat from the array 110. Since this mode may add undesired heat to the conditioned space 221, it may be operated at times when the space is unoccupied.

*Thermal Flywheel Effect:* Even in cases where the array 110 and AHU 1106 are completely decoupled through settings of the damper positions (e.g. see 205,206,1102,1103), there can still be functional cooperation. One example of this would be the potential use of the ITM 1108 for daytime summer use. During summer days the array 110 is typically just serving the water heater 217 and exhausting through damper 205 and exhaust vent 210 and having no interaction with the AHU 1106 for space conditioning. In such a case, dampers 206 and 1102 are typically closed and the AHU 1106 is operating completely independently. In such independent operation, it is common for the lightweight construction of typical new buildings to heat up rapidly creating the need for cooling of the conditioned space 221 by early afternoon. High mass passive structures such as adobe and concrete avoid this issue by having large thermal masses in the building materials that offset this heat gain later into the evening. Lightweight construction has no such protection built into its structure and the cost of building it in can be prohibitive. An advantageous property achieved through the integration of the ITM 1108 with an AHU 1106 is the ability of this combination to provide a structure of lightweight construction with the thermal response of as a high mass structure. If instead of drawing the return air through damper 1103 as is typical, damper 1103 is closed and 1102 is opened during operation of the AHU 1106, the return air will be pulled through the base vents 1109 of the ITM 1108 and effectively couple its thermal mass with that of the conditioned space 221.

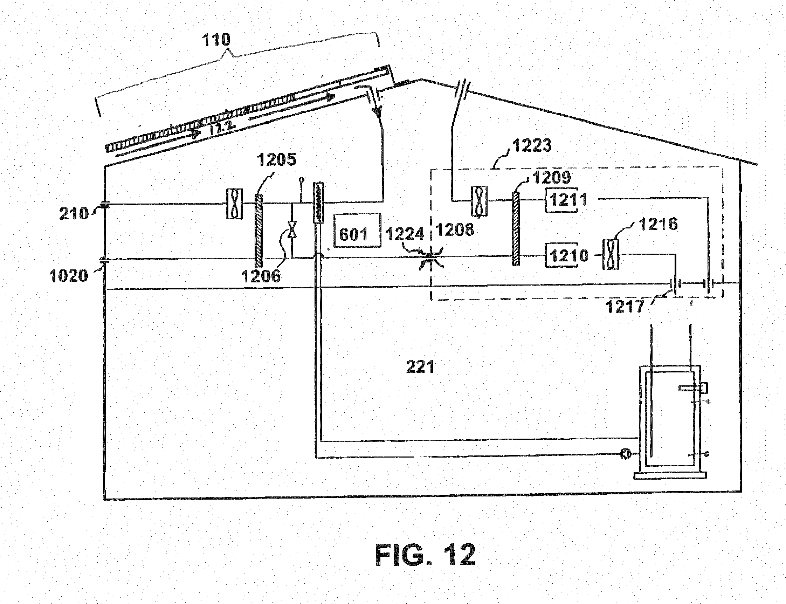

While the array 110 is primarily designed to deliver heat, an embodiment provides that the system for using array 110 may be configured to convert its heating capacity to cooling capacity by coupling the array 110 with an adsorption cooling system. Such coupling is illustrated by a system of FIG. 12. Adsorption systems utilize a desiccant combined with humidification to achieve a cooling effect. Cooling air through humidification/evaporation is well known and utilized in swamp coolers throughout the United States.

The evaporative cooling effect can be further enhanced by coupling an indirect and direct evaporative cooler together. With reference to FIG. 12, an Indirect Direct Evaporative Cooler (IDEC) 1223 is indicated by the system within the dashed box. The lower IDEC stage comprising the direct evaporative section is comprised of a humidifier 1210 and blower 1216 and represents a traditional evaporative cooler. The indirect portion consisting of a blower 1208, humidifier 1211, and heat recovery wheel 1209 acts to pre-cool the air entering the direct portion. The indirect portion achieves this pre-cooling by saturating the exhaust air from the conditioned space 221 using humidifier 1211 to achieve evaporative cooling to near the exhaust air wet bulb temperature, which will be significantly below the ambient temperature. The heat recovery wheel 1209 then transfers the heat but not the moisture between the cool exhaust air leaving humidifier 1211 and hotter incoming ambient air entering the IDEC system at point 1224 thereby pre-cooling the air for the direct evaporative section.

Cooling systems based on the IDEC principle are limited by conditions of ambient air with regards to relative humidity, as well as humidity restrictions that the conditioned space 221 may require. The first demand is that IDEC systems 1223 must run in climates with relatively low humidity air to achieve significant cooling capacity through evaporation using the humidifiers (1210,1211). This occurs naturally in the dry desert climates, but is not typical of other more temperate climates that can experience 75-90% relative humidity in the summer cooling season. The other limiting factor is that IDEC systems 1223 provide not only cooling and ventilation air, but also carry humidity into the conditioned space 221 by means of operation of the humidifier 1210 to achieve evaporative cooling. If air supplied by the IDEC system 1223 though vent 1217 is overly humidified to near saturation, condensation could occur within the conditioned space 221. These potential limitations to operation of the IDEC system 1223 can be mitigated if the incoming air could be dehumidified before entering the IDEC system 1223. Dehumidification of ambient air extends the operation of IDEC systems 1223 to humid climates. The array 110 can provide a heated air stream to dehumidify the ambient air by means of a desiccant system and the thermal generation of the array 110 matches the load requirement of the desiccant system during the summer cooling season.

FIG. 12 shows one configuration for arranging an array 110 with a desiccant wheel 1205 positioned in the air stream to dehumidify air for the IDEC sysystem 1223 that follows. The desiccant wheel 1205 acts to transfer both heat and mass from the fluid 122 provided by the array 110 that would normally be exhausted through vent 210 and the ambient air for the IDEC system 1223 admitted through intake 1220. Desiccant wheels 1205 are often packed with a desiccant such as silica gel and are rotated between the two airstreams. As dry desiccant passes through the incoming ambient air steam admitted through vent 1220 it removes moisture from the air and becomes saturated. As the desiccant wheel 1205 rotates into the fluid 122 provided by the array 110, the hot fluid 122 drives the moisture from the desiccant wheel 1205 into the air that is exhausted through vent 210 and thereby regenerates the desiccant wheel 1205.

The system configuration illustrated in FIG. 12 can be changed from a cooling mode to a heating mode by simply disabling the components 1208, 1209, 1211, 1210 of the IDEC system 1223 and desiccant wheel 1205 while opening damper 1206. Ventilation rate Vₒ for the PVT array 110 can then be provided by operating IDEC blower 1216. This allows the system to operate in a direct heating mode using the existing components of the IDEC system 1223.

The basic Solar Assisted IDEC (SA-IDEC) system portrayed in FIG. 12 can be combined into different configurations and with components shown in other embodiments of this document to incorporate thermal mass, coupling to air handling units, coupling to water heaters, and combining the night time cooling operation with SA-IDEC operation to further enhance solar cooling. The SA-IDEC mode can be operated in several partial modes as described by examples provided below.

*Dehumidification Only:* In some instances it may not be necessary or desirable to reduce the sensible load (e.g reduction in temperature) of the conditioned space 221 through evaporative cooling, but solely to reduce the latent load (e.g. humidity) through dehumidification of the ventilation air. This can be achieved by running the desiccant wheel 1205 only and disabling or simply removing the IDEC system 1223.

*Dehumidification* + *Indirect Evaporative Cooling:* If sensible cooling is required in addition to dehumidification, the desiccant wheel 1205 can be run in tandem with the indirect evaporative components of the IDEC system 1223 consisting of blowers 1216 and 1208, heat recovery wheel 1209 and indirect humidifier 1211 to provide a reduction in both sensible and latent loads without the humidification associated with the direct humidifier 1210.

Although a specific implementation has been used to illustrate the potential of an array 110 to be coupled with a desiccant wheel 1205, other combinations of desiccant powered cycles are possible using liquid as well as solid sorbants. One such variant would replace the desiccant wheel 1205 with separate regenerators and conditioners that utilized a liquid desiccant such as Li-Cl or Ca-Cl to transfer the heat and mass between the air streams.

FIGS. 2 and 9-12 depict various configurations of real world loads that the array 110 may be used to service. These should be understood to be merely a limited set of representative embodiments used to describe the operation of the array in conjunction with loads and not a limitation on the types of loads or their configurations.

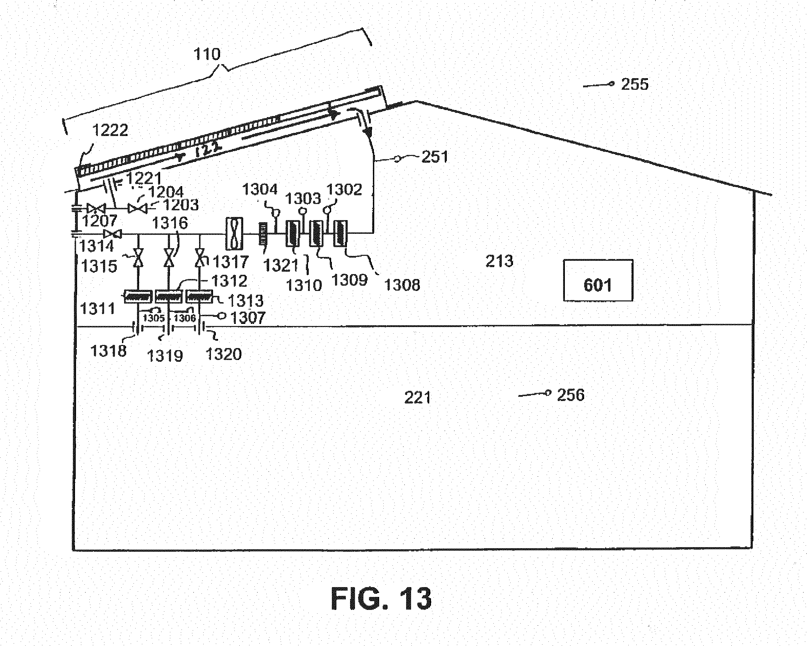

FIG. 13 represents a generic case where multiple loads 1308-1313 are placed in series and parallel with the outlet of array 110. The loads 1308-1313 may take the form of heat exchangers connected to distinct loads such as a water heater 217 or pool 1005 that changes the temperature of the air stream, or they may take the form of a desiccant wheel 1205 that changes both the temperature and humidity of the air stream. Alternately, these loads may contain inherent thermal mass such as Intermediate Thermal Mass (ITM) in the form of a packed bed 1109 which is capable of adding and removing energy from the air stream and transferring it to the internal mass. As such, the various loads may be described as energy consuming resources.

From the vantage of the system controller 601, all such loads can be separated from their physical construction and generically defined as a energy consuming resources at the target location 152 that have distinct characteristics and properties. In placing and arranging the loads 1308-1313 to form a system they can be arranged in series or parallel combinations. The configuration of loads 1308-1310 represents a series configuration while the configuration of loads 1311-1313 represents a parallel configuration.

In a series configuration such as that presented by loads 1308-1320, each loads experiences the same flow of the fluid 122 (e.g. air stream) provided from the array 110, but the air stream will have a different temperature and or humidity after each subsequent load as measured by sensors 1302-1304. In cases where the loads can be modulated, such as with heat exchangers where the flow on the secondary side (not shown in FIG. 13) can be modulated by a pump or other device, the amount of energy extracted by any particular load (1308,1309,1310) can be varied to allow for more or less energy to be passed through to the remaining downstream loads. The controller 601 can optimally sequence or modulate these loads as a set to maximize energy extraction from the air stream. Series staging of the loads is beneficial for loads that can utilize various levels of temperature or humidity from the air stream. The loads are typically arranged of decreasing demands of temperature from the array. The arrangement of the pool heat exchanger 1001 being placed in series downstream from the DHW heat exchanger 203 in FIG. 10 is an example of an arrangement where the lower temperature pool which traditionally operates at 30 C is able to make use of the residual heat in the air stream leaving the higher temperature water heater that traditionally operates at 50 C.

In a parallel configuration such as that presented by loads 1311-1313, each loads experiences identical levels of temperature and humidity as they are sourced from the same air stream, but the flow will be different as modulated by the dampers 1315-1317 placed in each parallel branch. Parallel staging of the loads is beneficial to loads that may require similar levels of temperature and humidity from the air stream to operate, loads such as different zones within the conditioned space 221, or loads that can not be internally modulated such as intermediate thermal mass (ITM). The dampers on each parallel branch allow the flow to be modulated between loads or sequenced to any particular load by closing the other branch dampers. FIG. 11 illustrates a parallel arrangement of loads where the ITM 1108 represents one of the parallel paths and the AHU 1106 represents the other. Because the ITM 1108 can not be modulated, it is desirable to create the parallel branch through the AHU 1106 to supply thermal energy more immediately to the conditioned space 221 when required

The actual arrangement of the various loads in parallel or series configurations may be set during the construction of the system and can be optimized with good design practices and knowledge of the thermal and physical characteristics of the loads. Once the physical arrangement of the loads has been set, the controller can then optimally match the thermal generation of the array 110 to the loads 1308-1315 by modulating and sequencing between the loads.

*Provision to Couple PVT Array Air Intake to Secondary Source:* In previous embodiments, the array intake was provided by leaving the leading edge 134 of the array 110 open so that it was always provided with ambient air. In FIG. 13, the intake provision of the array 110 has been modified to seal the leading edge with a cap 1222 and the installation of a dedicated air intake in the form of one or more vents 1221. In this configuration ambient air may be admitted to the array 110 by opening damper 1202 and closing damper 1203. Alternately, intake air may be provided from an alternate space 213 such as the attic by closing damper 1202 and opening damper 1204.

One reason for adding a mechanical complexity such as referenced above is that when the array intake is coupled to an alternate space 213 (e.g. in the form of an attic or other semi-conditioned location), beneficial ventilation is obtained of the alternate space 213 as a byproduct of ventilating the array 110.

*Monitoring of Energy Flows* It is becoming more and more common to measure the energy production from arrays of solar modules such as array 110. This desire for information comes not only from the consumer, who wishes to know the status of the system, but also from contractors for troubleshooting, and providers of incentives such as utilities and state agencies to validate that the arrays are producing their predicted energy yields.

Thermal energy in air-based systems can be calculated by knowing the flow rate of the air coupled with the energy content of the air as determined by its enthalpy as a function of temperature and humidity. An airflow measurement stations 1321 may be placed in the air stream to measure flow rates using a variety of methods ranging from differentials in static and velocity pressures to hot wire anemometers. Energy content of the air stream at any point can be measured with sensors 1301-1307 to monitor temperature and or humidity within the system ducts, or sensors 255-256 to measure the energy of ambient air and the conditioned space respectively. Once the flow rate is provided along with energy content from one or more sensors various energies can be calculated, which include:
(i) *Array Output:* Measured by subtracting the energy determined by ambient sensor 255 from the array outlet sensor 251. This is the thermal generation of the array 110.
*(ii) Energy Delivered to Series Staged Loads:* The energy going to any series staged load can be calculated as the change in energy content in the air stream across the load. As an example, the energy delivered to load 1308 can be determined by subtracting the energy determined by sensor 1302 from sensor 251. In a like manner the energy delivered to load 1309 can be determined by subtracting the energy determined by sensor 1303 from sensor 1302.
*(iii)Errergy Delivered to Parallel staged Loads:* The energy going to a parallel staged load can be calculated as the change in energy content in the air stream across the load. As an example, the energy delivered to load 1313 can be determined by subtracting the energy determined by sensor 1307 from sensor 1304. Such a calculation assumes that the flow passing through the load is known by airflow measurement station 1321. This will only be the case if the parallel loads are sequenced such that the full flow is only provided to a single load at a time. In situations where the airflow may be modulated or split among the parallel loads, each branch would require a means of monitoring airflow similar to airflow measurement station 1321.

Many other thermal energies can be calculated in a similar manner for other flows and operating modes discussed elsewhere in this document, but it is easy to see how the controller 601 is able to accurately measure and record the various thermal energy streams within the system in the manner described.

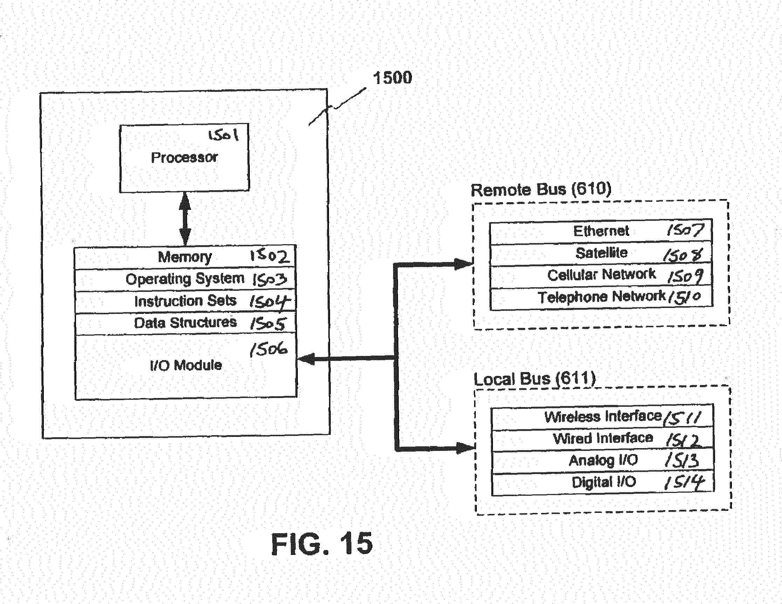

Numerous embodiments described herein provide for use of a controller in cooperation with an array and a system for utilizing output from the array. FIG. 15 is a hardware diagram that depicts a controller 1500 in accordance with one or more embodiments provided herein. The controller 1500 may be used to achieve the functionality described herein, including functionality described with embodiments that utilize the controller 601. While numerous components and functionality are described for controller 1500 below, it should be apparent that not all components and functionality are needed for a particular embodiment or implementation.

In one embodiment, controller 1501 includes a processor 1501 capable of performing the necessary computations and logic to carry out the procedures and optimizations outlined elsewhere. To assist in these tasks and others the controller may contain an I/O module 1506 and memory 1502 of a non-volatile form for storing an operating system 1503, instruction set 1504, data structures 1505, and an I/O module 1506. The memory 1502 may also contain a volatile component used for temporary storage required by the processor 1501. The controller may take the form of a computer system, dedicated microcontroller, or other device capable of achieving this or similar functionality.

The instruction sets 1504 may contain the necessary code to carry out the various operations required by the controller 1500, such as, for example, the optimization routines and management of the various inputs and outputs of the I/O Module 1506. The data structures 1505 may be capable of storing operational data from the system including sensor data, calculated energy values, setpoint parameters and any other data required by the controller 1500.

The I/O module 1506 provides communications with systems, components, and services outside of the controller. The IO module may interface these items through a remote or local data bus 1517, 1519.

Communication over a remote bus 1521 may be enabled by one or more protocols including but not limited to Ethernet 1507, satellite 1508, cellular network 1509, or telephone network 1510. Hardware and software to implement these protocols may be embedded into the controller as part of the I/O module 1506 or exist as separate components in communication with the controller 1500 through the I/O module 1506. The controller 1500 may communicate over the remote bus 1521 using any one or more multiple protocols (1507-1510) simultaneously.

The local data bus 1517 exists primarily as a means of communication with local sensors, inputs, and components. Communication over the local bus may be enabled by one or more protocols including but not limited to the following. A wireless interface 1511 such as IEEE 802.11, IEEE 810.15.4, or others. A wired interface 1512 such as Ethernet, serial communication, parallel communication, powerline carrier such as X-10, or others. Analog I/O 1513 such as voltage inputs and outputs, current inputs and outputs, or others. Digital I/O 1514 including low-level binary inputs & outputs, power relays, pulse width modulation, or others. Hardware and software to implement these protocols may be embedded into the controller as part of the I/O module 1506 or exist as separate components in communication with the controller 1500 through the I/O module 1506. The controller 1500 may communicate over the remote bus 1521 using multiple protocols (1507-1510) simultaneously.

### CONCLUSION

Although the descriptions above contain many specifics, these should not be construed as limiting the scope of the invention but as merely providing illustrations of some embodiments.
Further aspects are disclosed in the following numbered clauses.
1. A method for operating a solar module array at a target location, the method comprising:
   programmatically determining, for a given time period, a demand for an output of the solar module array by one or more energy consuming resources at the target location;
      and
   affecting an efficiency of the solar module array based at least in part on the determined demand.
2. The method of clause 1, wherein programmatically determining the demand by one or more energy consuming resources includes determining the demand by a plurality of components that utilize a heat output or an electrical output from the solar module array.
3. The method of clause 1, wherein affecting an efficiency of the solar module array includes controlling one or more devices that affect a temperature of one or more modules in the solar module array.
4. The method of clause 3, wherein controlling one or more devices that affect a temperature of one or more modules includes controlling a device that affects a volumetric airflow under the solar module array.
5. The method of clause 2, wherein affecting an efficiency of the solar module array includes controlling a flow of fluid underneath the solar module array.
6. The method of clause 3, wherein controlling an air flow rate includes controlling a device to draw air in from the environment through a leading edge of the solar module array.
7. The method of clause 3, further comprising varying the efficiency of the solar module array based at least in part on an optimization scheme that prioritizes minimizing an energy intake of the one or more components of the target location from a utility source.
8. The method of clause 7, wherein varying the efficiency of the solar module array includes determining a desired efficiency range for a given time period based on any one or more of (i) a time of day for the given time period, (ii) external environmental conditions, (iii) occupancy of the target location.
9. The method of clause 7, wherein varying the efficiency of the solar module array includes determining a desired efficiency range for a given time period based on a cost of procuring energy from a utility source during the given time period.
10. The method of clause 7, wherein varying the efficiency of the solar module array includes determining a desired efficiency range for a given time period based on prioritizing select energy consuming resource that are to be serviced in the given time period over other energy consuming resources that are at the target location.
11. The method of clause 10, wherein prioritizing select energy consuming resource that are to be serviced in the given time period includes determining one or more of (i) a type of each energy consuming resource, (ii) a demand level of each energy consuming resource, or (iii) an amount of energy needed to service each energy consuming resource.
12. The method of clause 3, further comprising varying the efficiency of the solar module array based at least in part on an optimization scheme that prioritizes maximizing energy output of the solar module array.
13. The method of clause 1, wherein programmatically determining the demand includes determining an expected demand for an upcoming time period.
14. The method of clause 1, wherein programmatically determining the demand includes determining an actual demand for a past time period.
15. The method of clause 3, further comprising receiving weather data from one or more of a system sensor or a remote source, and varying the efficiency of the solar module array based at least in part on the weather data.
16. A system for operating a solar module array that is mounted for use by a target location, the system comprising:
   a device that is operational to direct fluid flow under the solar module array, the fluid flow being in sufficient proximity to the solar module array to affect an operational temperature of at least a region of the solar module array; a controller that is coupled to the device, wherein the controller controls operation of the device to affect a flow rate of the fluid under the solar module array;
   a bus that interconnects the controller to one or more resources that provide energy consumption information about one or more components in the target location;
   wherein the controller is configured to control the device in directing the fluid flow so as to affect the operational temperature of the solar module array, based at least in part on the energy consumption information.
17. The system of clause 16, wherein the one or more resources include a temperature sensor for determining a temperature of fluid that is outputted from the array, and a temperature sensor for a load that uses thermal energy.
18. The system of clause 16, wherein the controller controls the operational capacity of the device by implementing an optimization scheme using the energy consumption information.
19. The system of clause 16, wherein the controller is configured to implement the optimization scheme by factoring a cost of the one or more components consuming energy from a utility in place of receiving thermal or electrical energy from the array.
20. The system of clause 16, wherein the controller is configured to use the energy consumption information to determine an anticipated energy consumption of the one or more components in a given time period
21. The system of clause 16, wherein the controller is configured to implement an optimization scheme that determines how the device is controlled in directing the fluid flow so as to affect the operational temperature of the solar module array.
22. The system of clause 21, wherein the controller is further configured to determine and cause implementation of a sequencing or a selection of the one or more components in receiving a thermal or electrical output of the solar module array.
23. The system of clause 21, wherein the controller is further configured to determine and cause implementation of a distribution of a thermal or electrical output of the solar module array to the one or more components.
24. The system of clause 21, wherein the controller is configured to use the optimization scheme to factor a cost of servicing energy needs to the one or more components from a utility in prioritizing a cost saving for the use of the solar module array.
25. The system of clause 16, wherein the controller is further configured to communicate control of one or more devices that distribute thermal or electrical output to the one or more components.
26. The system of clause 16, further comprising a thermal mass that stores thermal energy from the array for a given duration, and wherein the controller is further configured to anticipate use of thermal energy provided from the thermal mass in at least a time period that follows the given duration.
27. The system of clause 16, wherein the controller causes thermal energy produced by the solar module array to be directed to a dessicant or heat recovery system, so as to reduce demand of the one or more components for energy.
28. The system of clause 16, wherein the controller is configured to implement an optimization scheme in which weather data is used in determining one or more of the operational capacity of the device and/or the components that are to receive energy at a given instant.
29. Acontroller for a solar module array that is mounted in operation at a target location, the comprising:
   control module configured to control a device that is operational to direct fluid flow under the solar module array, wherein the fluid flow is in sufficient proximity to the solar module array to affect an operational temperature of at least a region of the solar module array, wherein said control module controls operation of the device to affect a flow rate of the fluid under the solar module array;
   interface module coupled to a data bus and configured to process energy consumption information that is received from any one of a plurality of components, each of the plurality of components being configured to detect or determine an energy consumption by one or more components that are serviced by an output of the solar module array;
   wherein the control module is further configured to control the operation of the device using the energy consumption information.
30. The controller of clause 29, wherein the control module is configured to control the device in accelerating or de-accelerating the fluid flow.
31. The controller of clause 29, control module configured to control a device that is operational to direct fluid flow under the solar module array by controlling a blower in increasing or decreasing air flow under the solar module array.
32. The controller of clause 29, wherein the interface module couples to the bus to receive temperature readings from one or more sensors, and wherein the energy consumption information corresponds to a temperature reading of one or more of (i) the fluid flow just after the fluid flow exits the solar module array, or (ii) the fluid flow after the fluid flow exits the solar module array and is used by at least one component.
33. The controller of clause 29, wherein the control module is configured to use the energy consumption information to determine an anticipated energy consumption of the one or more components in a given time period
34. The controller of clause 29, wherein the control module is configured to implement an optimization scheme that determines how the device is controlled in directing the fluid flow so as to affect the operational temperature of the solar module array.
35. The controller of clause 34, wherein the control module is further configured to determine and cause implementation of a sequencing or a selection of the one or more components in receiving a thermal or electrical output of the solar module array.
36. The controller of clause 34, wherein the control module is further configured to determine and cause implementation of a distribution of a thermal or electrical output of the solar module array to the one or more components.
37. The controller of clause 34, wherein the control module is configured to use the optimization scheme to factor a cost of servicing energy needs to the one or more components from a utility energy source in prioritizing a cost saving for the use of the solar module array.
38. The controller of clause 29, wherein the control module is further configured to communicate control of one or more devices that distribute thermal or electrical output to the one or more components.
39. The controller of clause 29, wherein the controller is provided as a dedicated device at the target location.
40. The controller of clause 29, wherein at least a portion of the controller is provided on a personal computer.
41. A system for operating a solar module array that is mounted for use by a target location, the system comprising:
   a device that is operational to direct a fluid just beneath the solar module array, the device causing the fluid to flow in sufficient proximity to the solar module array to affect an operational temperature of at least a region of the solar module array while heating the fluid;
   distribution equipment that combines to direct (i) the heated fluid or (ii) energy generated from the heated fluid to the one or more energy consuming resources of the target location;
   one or more components that are configured to detect or determine an energy consumption by one or more assets that are serviced by use of the solar module array
   a controller that is coupled to the device, wherein the controller controls operation of the device to affect a flow rate of the fluid beneath the solar module array;
   a bus that interconnects the controller to one or more resources that provide energy consumption information about one or more components in the target location;
   wherein the controller controls the operational capacity of the device using the energy consumption information.

## Claims

1. A solar module array (110) comprising:
a plurality of solar modules (124, 125) mounted on an underlying structure;
a device (52) configured to direct air flow (122) under the solar module array (110), the air flow (122) being sufficiently proximate to the solar module array (110) to affect an operational temperature of at least a region of the solar module array (110); and
a controller (10) comprising a control module (14) coupled to the device (52) and configured to receive energy consumption information (32) of one or more components, the control module having programming or logic to control the device (52) and affect a flow rate of the air flow (122) under the solar module array (110);
wherein the control module (14) controls operation of the device (52) using the energy consumption information in directing the air flow (122) to provide energy for use by the one or more components while increasing efficiency of the solar module array (110) in producing electricity.

2. The solar module array of claim 1, wherein the plurality of solar modules (124, 125) includes a plurality of thermal modules (125) and a plurality of photovoltaic modules (124).

3. The solar module array of claim 2, wherein the plurality of solar modules (124, 125) are configured such that the air flow flows beneath the photovoltaic modules (124) prior to flowing beneath the thermal modules (125).

4. The solar module array of any one of the preceding claims, wherein at least a portion of an entry edge (134) of a perimeter of the solar module array (110) is unsealed to enable entry of ambient air therethrough.

5. The solar module array of 4, wherein the remaining perimeter of the solar module array (110) is sealed.

6. The solar module array of claim 4, wherein the entry edge (134) is a bottom edge of the perimeter the solar module array (110).

7. The solar module array of claim 1, wherein the plurality of solar modules (124. 125) are mounted such that at least one duct is defined just beneath the solar module array (110), wherein the device (52) is configured to direct the air flow (122) through the at least one duct such that the air flow (122) is heated by the plurality of solar modules (124, 125).

8. The solar module array of claim 1, wherein the control module (14) is configured to control the device (52) in accelerating or de-accelerating the air flow (122).

9. The solar module array of claim I, wherein the device (52) is a blower, the control module (14) configured to control the blower in increasing or decreasing air flow (122) under the solar module array (110).

10. The solar module array of claim 1, wherein the controller (10) further includes an interface module (12) coupled to process inputs from one or more sources to determine energy consumption information (32) of the one or more components.

11. The solar module array of claim 10. wherein the one or more sources include a first temperature sensor (215) for the solar module array (110), and a second temperature sensor (251, 252, 253, 254, 255, and 256) for a load that uses thermal energy.

12. The solar module array of claim 1, wherein the controller (10) is configured to implement an optimization scheme to control an operational capacity of the device (52) using the energy consumption information (32).

13. The solar module array of claim 1, wherein the controller (10) is configured to use the energy consumption information (32) to determine an anticipated energy consumption of the one or more components in a given time period.

14. The solar module array of claim 1, wherein the controller (10) is configured to implement an optimization scheme that determines how the device (52) is controlled in directing the air flow (122) so as to affect the operational temperature of the solar module array (110).

15. The solar module array of claim 14, wherein the controller (10) is configured to determine and cause implementation of a sequencing or a selection of the one or more components in receiving a thermal or electrical output of the solar module array (110).

16. The solar module array of claim 14, wherein the controller (10) is configured to determine and cause implementation of a distribution of a thermal or electrical output of the solar module arras (110) to the one or more components.
